# EUROPEAN PATENT APPLICATION

(11) **EP 4 834 728 A1**
(43) Date of publication of application: **04.11.2026**
(21) Application number: 24912942.0
(22) Date of filing: 25.12.2024
(51) Int. Cl.: B62D 25/08, B62D 25/24, B62D 49/00

(54) **CABIN**

(30) Priority: 27.12.2023 JP 2023221064
(71) Applicant: KUBOTA CORPORATION, Osaka-shi, Osaka 530-0011 (JP)
(72) Inventor: YASUNOBE, Daisuke, Sakai-shi, Osaka 590-0908 (JP); KOBAYASHI, Yusuke, Sakai-shi, Osaka 590-0908 (JP); YOSHIMATSU, Hiroki, Sakai-shi, Osaka 590-0908 (JP); ISHIKAWA, Naho, Sakai-shi, Osaka 590-0908 (JP)
(74) Representative: Müller-Boré & Partner Patentanwälte PartG mbB
(86) International application number: PCT/JP2024/046009
(87) International publication number: WO 2025/143056

(57) **Abstract**

To provide a cabin which allows air inside the cabin to escape to the outside when the pressure in the cabin increases while preventing or reducing the entry of water and foreign matter into the cabin from outside the vehicle.

A cabin (1) includes a machine-body wall provided around an operator's seat (6), at least one air vent hole (222) in the machine-body wall, and a water-blocking cover (223) attached to the machine-body wall. The water-blocking cover (223) is positioned to cover the at least one air vent hole (222) and defines, with the machine-body wall, a space opening downward.

## Description

### Technical Field

The present invention relates to cabins each mounted on a machine body of a traveling vehicle or a working machine, such as a tractor, a wheel loader, or a backhoe.

### Background Art

PTL 1 discloses a cabin including a pair of left and right front pillars, a pair of left and right rear pillars, and doors that are opened and closed when an operator gets into and out of the cabin.

### Citation List

### Patent Literature

PTL 1: Japanese Unexamined Patent Application Publication No. 2020-097368

### Summary of Invention

### Technical Problem

The cabin disclosed in PTL 1 is of a four-pillar type including a pair of left and right front pillars and a pair of left and right rear pillars. The left and right doors of the cabin are larger than those of a six-pillar type cabin. In such a four-pillar type cabin, when any of the doors is closed, air entering the cabin increases the pressure in the cabin, which is likely to cause the door to fail to fully close. For this reason, some related-art cabins are provided with vent means including an opening that allows air inside the cabin to escape to the outside when the door is closed.

In a cabin provided with vent means including an opening, however, water or foreign matter may enter the cabin from outside the vehicle through the opening.

The present invention has been made to solve the above-described issue in the related art and aims to provide cabins each of which allows air inside the cabin to escape to the outside when the pressure in the cabin increases while preventing or reducing the entry of water and foreign matter into the cabin from outside the vehicle.

### Solution to Problem

A cabin according to an example embodiment of the present invention includes a machine-body wall provided around an operator's seat, at least one air vent hole in the machine-body wall, and a water-blocking cover attached to the machine-body wall, wherein the water-blocking cover is positioned to cover the at least one air vent hole and defines, with the machine-body wall, a space opening downward.

The machine-body wall may include a rear wall portion located behind the operator's seat. The at least one air vent hole may be provided in the rear wall portion.

The rear wall portion may be provided with at least one closure plate to close the at least one air vent hole. The at least one closure plate may be configured to open the at least one air vent hole when a pressure in the cabin exceeds a predetermined pressure.

The at least one air vent hole may include a plurality of air vent holes arranged in a left-right direction. The at least one closure plate may include a plurality of closure plates provided to individually close the plurality of air vent holes.

The rear wall portion may include an inclined wall portion extending rearward and downward. The at least one air vent hole may be provided in the inclined wall portion. The at least one closure plate may cover the at least one air vent hole on an upper face of the inclined wall portion.

The rear wall portion may include a rear plate portion located behind the inclined wall portion and extending in a top-bottom direction. The at least one air vent hole may include at least one first hole provided in the inclined wall portion and at least one second hole provided in the rear plate portion. The at least one closure plate may be configured to close the at least one first hole.

The at least one closure plate may include an upper end portion secured to the rear wall portion above the at least one air vent hole and be configured to swing upward about the upper end portion when the pressure in the cabin exceeds the predetermined pressure.

The cabin may further include a ventilation passage to discharge air to outside of the cabin through the at least one first hole, the at least one second hole, and the space defined between the water-blocking cover and a rear face of the rear wall portion.

An opening area of the at least one second hole and a flow area of the ventilation passage defined between the water-blocking cover and the rear face of the rear wall portion may each be set to be equal to or greater than an opening area of the at least one first hole.

The at least one closure plate and the inclined wall portion, to which the at least one closure plate is attached, may be inclined at an angle of 20 to 45 degrees relative to a horizontal direction.

The at least one closure plate may include, at a rear end thereof, a rib portion extending in a left-right direction.

The rear plate portion may include a first region including the at least one second hole and a second region located below the first region and inclined forward and downward.

### Advantageous Effects of Invention

The above-described cabin allows air inside the cabin to escape to the outside when the pressure in the cabin increases while preventing or reducing the entry of water and foreign matter into the cabin from outside the vehicle.

### Brief Description of Drawings

[FIG. 1] FIG. 1 is a left side view of a tractor.
[FIG. 2] FIG. 2 is a perspective view of a cabin as viewed from the left front.
[FIG. 3] FIG. 3 is a right side view of the cabin.
[FIG. 4] FIG. 4 is a front view of the cabin.
[FIG. 5] FIG. 5 is a plan view of the cabin.
[FIG. 6] FIG. 6 is a rear view of the cabin.
[FIG. 7] FIG. 7 is a perspective view of the cabin as viewed from the left rear.
[FIG. 8] FIG. 8 is a longitudinal sectional view illustrating a rear lower frame.

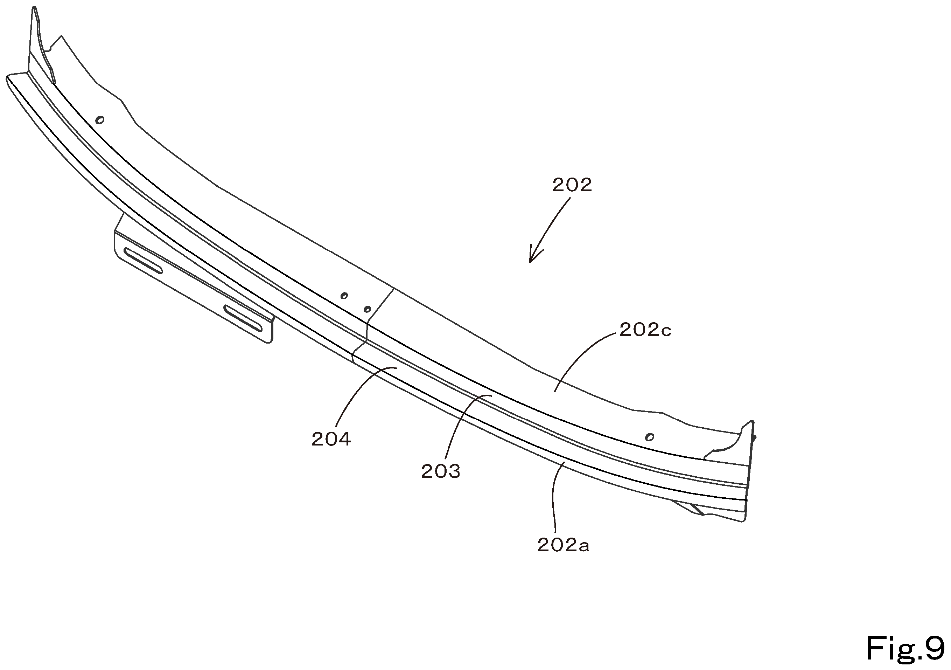

[FIG. 9] FIG. 9 is a perspective view of the rear lower frame.
[FIG. 10] FIG. 10 is a diagram illustrating a comparison between the angles of inclination of upper and lower faces of the rear lower frame.
[FIG. 11] FIG. 11 is a rear view of the rear lower frame.
[FIG. 12] FIG. 12 is a plan view of the rear lower frame.
[FIG. 13] FIG. 13 is a perspective view illustrating a junction of the rear lower frame and a rear pillar.
[FIG. 14] FIG. 14 is a front view illustrating a vent system.
[FIG. 15] FIG. 15 is a perspective view illustrating a junction of the rear lower frame, the rear pillar, and a side frame as viewed from the upper left front.
[FIG. 16] FIG. 16 is a perspective view illustrating a junction of the rear lower frame, the rear pillar, and the side frame as viewed from the lower rear.
[FIG. 17] FIG. 17 is an exploded perspective view of the vent system.
[FIG. 18] FIG. 18 is a longitudinal sectional view of the vent system including a partial enlarged perspective view.
[FIG. 19] FIG. 19 is a perspective view illustrating a lower portion of a left entrance/exit opening of the cabin.
[FIG. 20] FIG. 20 is a side view illustrating a junction of a side lower beam and a coupling frame.
[FIG. 21] FIG. 21 is a side view illustrating a junction of a side lower beam and a coupling frame in the related-art cabin.
[FIG. 22] FIG. 22 is a perspective view illustrating the vicinity of a left front pillar of the cabin.
[FIG. 23] FIG. 23 is an exploded perspective view illustrating an arrangement structure of a left front portion (including a left coupling frame and a front lower frame) of the cabin, the left front pillar, an air-conditioner hose, and a bracket.
[FIG. 24] FIG. 24 is a perspective view of a reinforcing bracket as viewed from above.
[FIG. 25] FIG. 25 is a perspective view illustrating a positional relationship between the reinforcing bracket and an opening frame.
[FIG. 26] FIG. 26 is a perspective view illustrating a positional relationship between the reinforcing bracket and a coupling-purpose frame.
[FIG. 27] FIG. 27 is a perspective view illustrating a positional relationship between left and right reinforcing brackets and mount members.
[FIG. 28] FIG. 28 is a perspective view illustrating an attachment position on the reinforcing bracket at which the mount member is to be attached.
[FIG. 29] FIG. 29 is a perspective view of the reinforcing bracket provided with internal ribs.

### Description of Embodiments

A cabin 1 according to an example embodiment will be described below with reference to the drawings as appropriate.

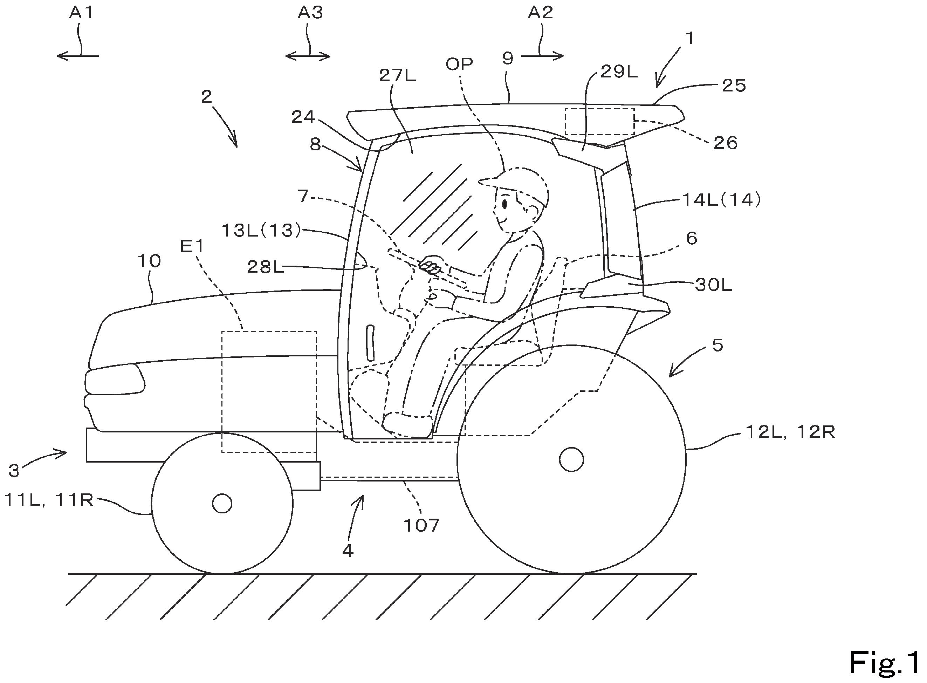

FIG. 1 is a side view of a tractor 2 including the cabin 1 according to the present example embodiment. In the present example embodiment, the tractor 2 is illustrated as a working machine (vehicle) on which the cabin 1 of the present invention is mounted.
However, a wheel loader, a backhoe, or the like may be used as a working machine on which the cabin 1 of the present invention is mounted.

As used herein, the direction of arrow A1 in FIG. 1 (direction of forward travel of the tractor 2) is referred to as a forward direction, the direction of arrow A2 in FIG. 1 (direction of rearward travel of the tractor 2) is referred to as a rearward direction, and the direction of arrow A3 in FIG. 1 is referred to as a front-rear direction. Therefore, the direction closer to the viewer of FIG. 1 is a leftward direction in describing the tractor 2 and the cabin 1, and the direction farther away from the viewer of FIG. 1 is a rightward direction in describing the tractor 2 and the cabin 1. These directions coincide with the directions as viewed from an operator OP (hereinafter, a person (driver) who rides on the tractor 2 and drives or operates the tractor 2 is referred to as the operator OP) in the tractor 2 (operator's seat 6). Furthermore, the tractor 2 and the cabin 1 will be described with a horizontal direction orthogonal to the front-rear direction A3 being defined as a width direction (or a left-right direction). Additionally, a direction in the width direction from a right portion of the tractor 2 toward a central portion thereof or from a left portion thereof toward the central portion is referred to as inward in the width direction. In other words, the phrase "inward in the width direction" refers to a direction in the width direction toward the center of the tractor 2.

As illustrated in FIG. 1, the tractor 2 includes a machine body (vehicle body) 3 capable of traveling. The machine body 3 includes a prime mover E1 and a power transmission case 4.

The prime mover E1 is configured to generate a driving force to cause the machine body 3 to travel. In the present example embodiment, a diesel engine is used as the prime mover E1. The prime mover E1 is located in a front portion of the tractor 2 and is covered with a hood 10. The hood 10 includes a curved upper surface that slightly protrudes upward and encloses a space to accommodate the prime mover E1. In the tractor 2 in the present example embodiment, the prime mover E1 is accommodated in the space enclosed by the hood 10.

The prime mover E1 may be an electric motor instead of the diesel engine used in the present example embodiment, or may be of a hybrid type in which a diesel engine and an electric motor are combined.

The power transmission case 4 is configured by, for example, directly coupling a flywheel housing that houses a flywheel, a clutch housing 107 (refer to FIG. 1) that houses a clutch configured to selectively connect and disconnect transmission of power from the prime mover E1 via the flywheel, and a transmission case that houses a transmission configured to change the speed of the power transmitted via the clutch.

As illustrated in FIG. 1, the tractor 2 includes a traveling device 5 supporting the machine body 3 such that the machine body 3 can travel. The traveling device 5 of the tractor 2 in the present example embodiment illustrated in FIG. 1 is of a wheeled type (four-wheel type) including a left front wheel 11L and a right front wheel 11R arranged at a front portion of the machine body 3 and a left rear wheel 12L and a right rear wheel 12R arranged at a rear portion of the machine body 3. In other words, the tractor 2 in the present example embodiment includes the traveling device 5 configured to travel on four wheels, namely, the left front wheel 11L, the right front wheel 11R, the left rear wheel 12L, and the right rear wheel 12R.

As illustrated in FIG. 1, the cabin 1 is a compartment that the operator OP enters to drive and operate the machine body 3. In the present example embodiment, the cabin 1 is mounted on the rear portion of the machine body 3. The operator's seat 6 on which the operator OP sits is provided in a rear portion of the interior of the cabin 1 (referred to as a cabin interior). A steering wheel 7 for operating, for example, the left front wheel 11L and the right front wheel 11R is provided in front of the operator's seat 6.

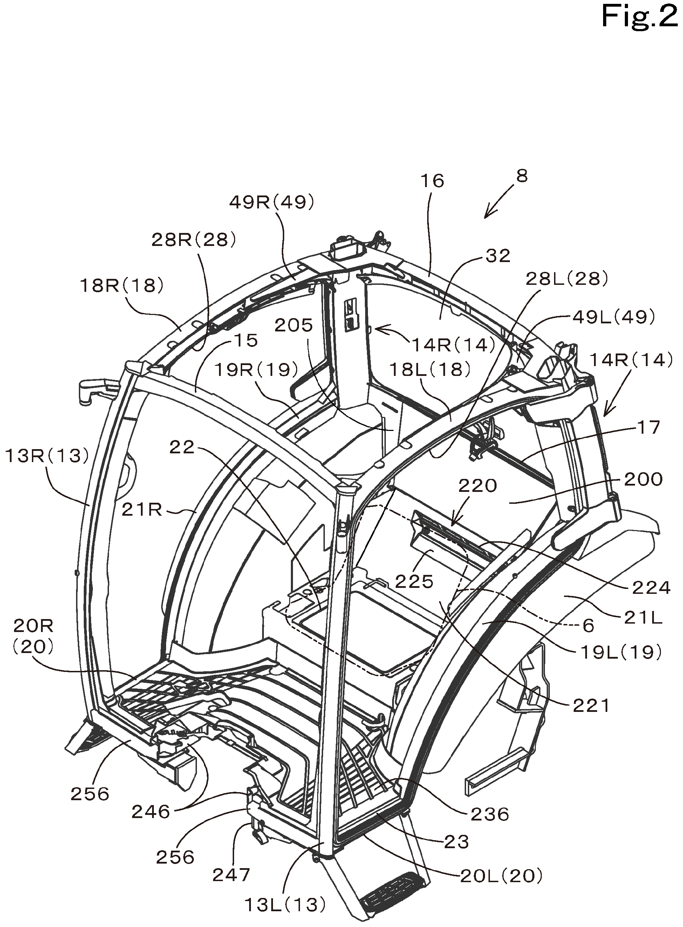

As illustrated in FIGS. 1 and 2, the cabin 1 includes a cabin frame 8 formed by three-dimensionally combining elongated frame members into a tower-like structure. In other words, the cabin frame 8 defines a framed structure (outer framework) of the cabin 1 and includes a plurality of elongated frame members. Additionally, panel members such as a front panel 31 and doors (door panels 27), which will be described later, are arranged between the frame members combined three-dimensionally into a tower-like structure in the cabin frame 8. Furthermore, a roof 9 is provided at an upper portion of the cabin frame 8. As illustrated in FIG. 2, the cabin frame 8 in the present example embodiment is of a four-pillar type in which no center pillar (quarter pillar) is provided.

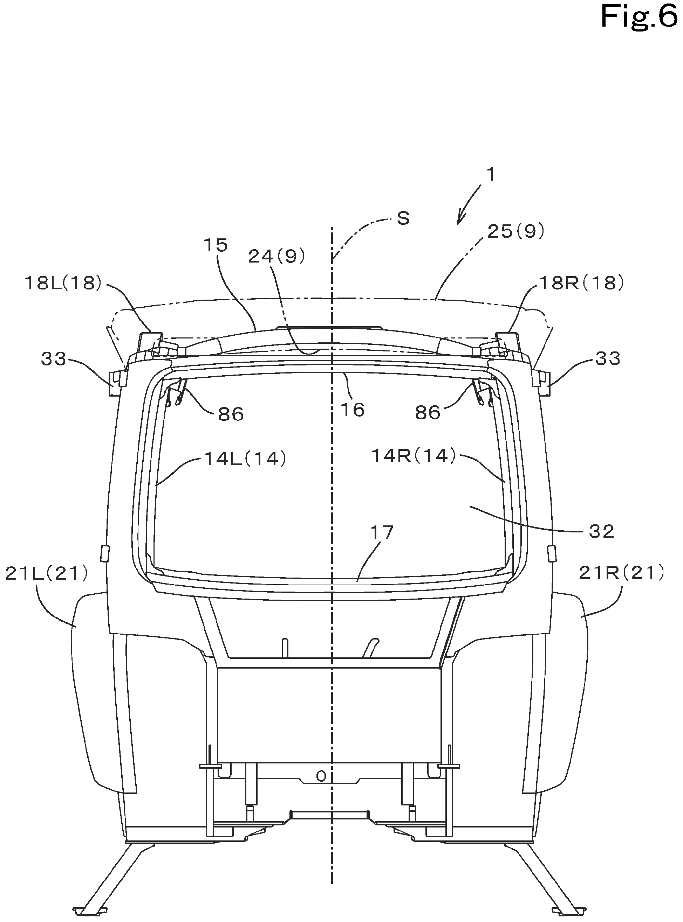

As illustrated in FIGS. 2 to 6 (particularly in detail in FIG. 2), the cabin frame 8 includes a plurality of elongated frame members. In the present example embodiment, the cabin frame 8 includes 11 frame members including a left front pillar 13L, a right front pillar 13R, a left rear pillar 14L, a right rear pillar 14R, a front beam 15, a rear beam 16, a rear lower frame 17, a left side beam 18L, a right side beam 18R, a left side lower beam 19L, and a right side lower beam 19R. The frame members included in the cabin frame 8 will be described in detail below.

As illustrated in detail in FIGS. 2 to 5, the left front pillar 13L and the right front pillar 13R are arranged in a front portion of the cabin frame 8 (in front of the operator's seat 6). The left front pillar 13L and the right front pillar 13R are arranged side by side at a distance from each other in the width direction and each extend in a top-bottom direction. The left front pillar 13L is provided at a front left corner of the cabin 1. The right front pillar 13R is provided at a front right corner of the cabin 1. The front beam 15 extends between an upper portion of the left front pillar 13L and an upper portion of the right front pillar 13R. That is, the upper portion of the left front pillar 13L and the upper portion of the right front pillar 13R are coupled by the front beam 15 in the left-right direction.

Hereinafter, the left front pillar 13L and the right front pillar 13R may be collectively referred to as front pillars 13.

As illustrated in FIGS. 2, 3, 5, and 6, the left rear pillar 14L and the right rear pillar 14R are arranged in a rear portion of the cabin frame 8 (behind the operator's seat 6). The left rear pillar 14L and the right rear pillar 14R are arranged side by side at a distance from each other in the width direction and each extend in the top-bottom direction. The left rear pillar 14L is provided at a rear left corner of the cabin 1. The right rear pillar 14R is provided at a rear right corner of the cabin 1. The rear beam 16 extends between an upper portion of the left rear pillar 14L and an upper portion of the right rear pillar 14R. That is, the upper portion of the left rear pillar 14L and the upper portion of the right rear pillar 14R are coupled by the rear beam 16 in the left-right direction. Additionally, the rear lower frame 17 extends between a lower portion of the left rear pillar 14L and a lower portion of the right rear pillar 14R. That is, the lower portion of the left rear pillar 14L and the lower portion of the right rear pillar 14R are coupled by the rear lower frame 17 in the left-right direction.

Hereinafter, the left rear pillar 14L and the right rear pillar 14R may be collectively referred to as rear pillars 14.

As illustrated in FIGS. 2, 3, and 5, the left side beam 18L and the right side beam 18R are arranged in the upper portion of the cabin frame 8. The left side beam 18L and the right side beam 18R are arranged side by side at a distance from each other in the width direction and each extend in the front-rear direction. The left side beam 18L is curved such that an intermediate portion thereof in the front-rear direction protrudes upward relative to front and rear ends thereof. Additionally, the right side beam 18R is curved such that an intermediate portion thereof in the front-rear direction protrudes upward relative to front and rear ends thereof.

The left side beam 18L extends between the upper portion of the left front pillar 13L and the upper portion of the left rear pillar 14L. That is, the upper portion of the left front pillar 13L and the upper portion of the left rear pillar 14L are coupled by the left side beam 18L in the front-rear direction.

The right side beam 18R extends between the upper portion of the right front pillar 13R and the upper portion of the right rear pillar 14R. That is, the upper portion of the right front pillar 13R and the upper portion of the right rear pillar 14R are coupled by the right side beam 18R in the front-rear direction.

Hereinafter, the left side beam 18L and the right side beam 18R may be collectively referred to as side beams 18.

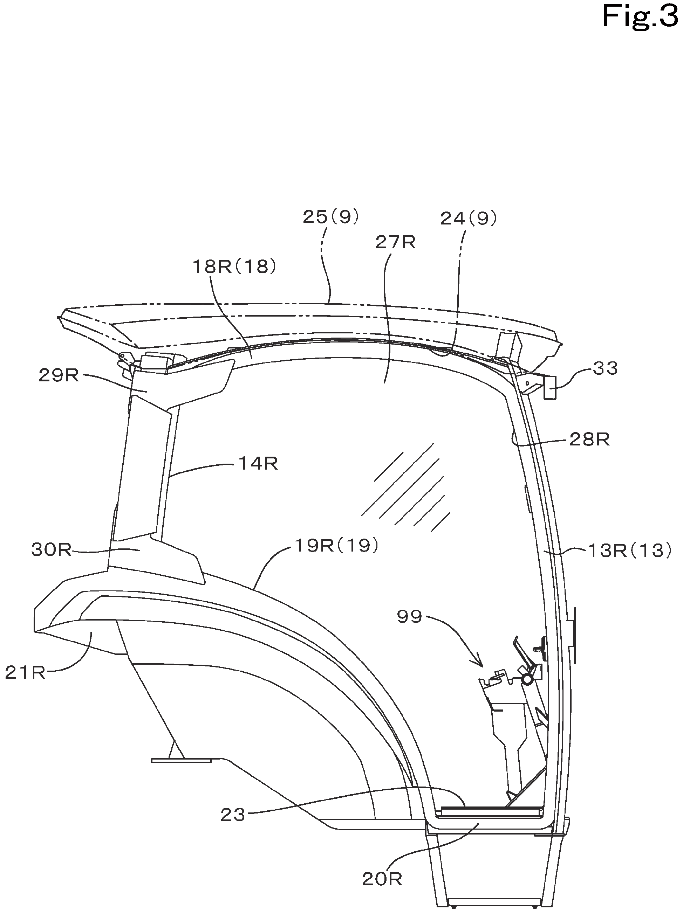

As illustrated in FIGS. 2 and 3, the left side lower beam 19L and the right side lower beam 19R are arranged in a lower portion of the cabin frame 8. The left side lower beam 19L and the right side lower beam 19R are arranged side by side at a distance from each other in the width direction.

The left side lower beam 19L extends forward and downward in an arc from a lower portion of the left front pillar 13L. In other words, the left side lower beam 19L extends downward as it extends forward from the lower portion of the left rear pillar 14L. A lower end of the left side lower beam 19L extending downward is coupled to a lower end of the left front pillar 13L by a left coupling frame 20L in the front-rear direction.

The right side lower beam 19R extends forward and downward in an arc from a lower portion of the right front pillar 13R. In other words, the right side lower beam 19R extends downward as it extends forward from the lower portion of the right rear pillar 14R. A lower end of the right side lower beam 19R extending downward is coupled to a lower end of the right front pillar 13R by a right coupling frame 20R in the front-rear direction.

Hereinafter, the left side lower beam 19L and the right side lower beam 19R may be collectively referred to as side lower beams 19.

As illustrated in FIG. 2, a fender 21L (left rear wheel fender) that covers the left rear wheel 12L is fixed to a lower face of the left side lower beam 19L and a lower end of the left rear pillar 14L. Additionally, a fender 21R (right rear wheel fender) that covers the right rear wheel 12R is fixed to a lower face of the right side lower beam 19R and a lower end of the right rear pillar 14R.

Additionally, as illustrated in FIGS. 2, 4, 5, and 6, the front beam 15 is located at a front upper portion of the cabin frame 8, and the rear beam 16 is located at a rear upper portion of the cabin frame 8.

The front beam 15 and the rear beam 16 are arranged side by side at a distance from each other in the front-rear direction. Each of the front beam 15 and the rear beam 16 is an elongated frame member extending in the left-right direction. The front beam 15 is curved such that an intermediate portion thereof in the left-right direction protrudes upward relative to left and right ends thereof. Furthermore, the rear beam 16 extends linearly in the left-right direction with substantially no change in height in the top-bottom direction.

The front beam 15 extends between the upper portions of the left front pillar 13L and the right front pillar 13R. In other words, the upper portions of the left front pillar 13L and the right front pillar 13R are coupled by the front beam 15 in the left-right direction.

The rear beam 16 extends between the upper portions of the left rear pillar 14L and the right rear pillar 14R. In other words, the upper portions of the left rear pillar 14L and the right rear pillar 14R are coupled by the rear beam 16 in the left-right direction.

As described above, the cabin frame 8 in the present example embodiment includes a combination of the above-described frame members, including the left front pillar 13L, the right front pillar 13R, the left rear pillar 14L, the right rear pillar 14R, the front beam 15, the rear beam 16, the rear lower frame 17, the left side beam 18L, the right side beam 18R, the left side lower beam 19L, and the right side lower beam 19R.

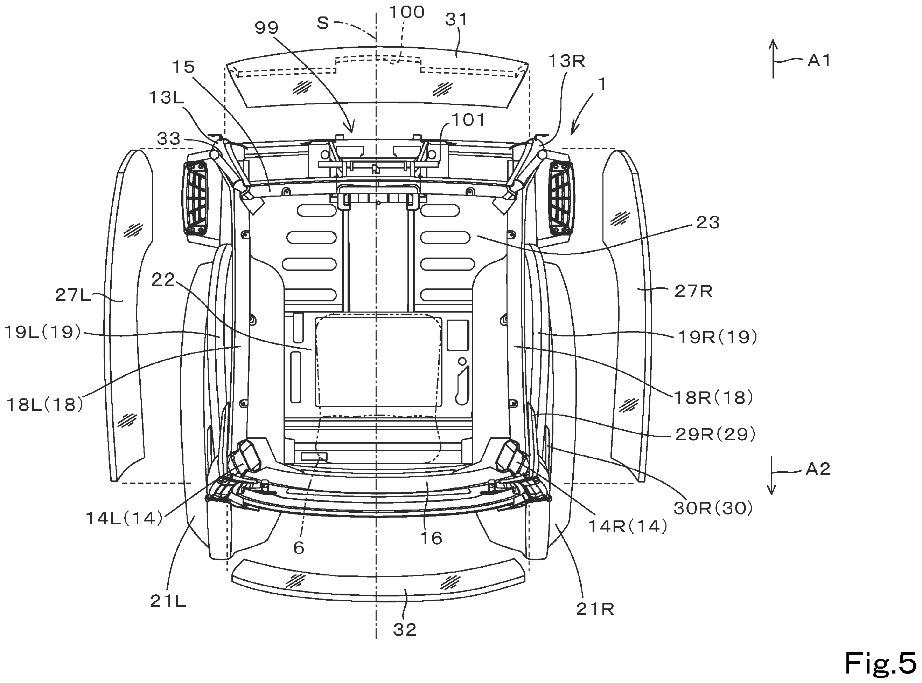

As illustrated in FIGS. 2 and 5, a floor sheet 22 is provided between the fender 21L (left rear wheel fender) and the fender 21R (right rear wheel fender). The floor sheet 22 is located below the operator's seat 6 and extends horizontally. The operator's seat 6 is mounted on the floor sheet 22. A rear portion of the floor sheet 22 extends obliquely rearward and upward and is located adjacent to a rear surface of the operator's seat 6. A step 23 is located in front of a front lower end of the floor sheet 22 and defines a floor at a position lower than the floor sheet 22. The step 23 is a plate (step plate) defining the floor of the cabin 1. The step 23 includes an upper surface on which the feet of the operator OP in the operator's seat 6 are to be placed.

As illustrated in FIGS. 1, 3, 4, and 6, the roof 9 is located on the upper portion of the cabin frame 8 and is configured to prevent wind, rain, and direct sunlight from entering the cabin 1. The roof 9 includes an inner roof 24 that defines a ceiling or the like of the interior of the cabin 1 and an outer roof 25 that defines an upper wall or the like of the ceiling. The inner roof 24 and the outer roof 25 define a hollow therebetween in which an air conditioner 26 configured to condition air in the cabin interior can be placed.

As illustrated in FIGS. 1 and 2, the cabin 1 according to the present example embodiment is configured to allow the operator OP to get in from both the left and right sides, and includes a left entrance/exit opening 28L in a left side of the cabin 1 and a right entrance/exit opening 28R in a right side of the cabin 1. The left entrance/exit opening 28L is provided with a left door (left door panel 27L) (refer to FIGS. 1 and 5) to close the left entrance/exit opening 28L. The right entrance/exit opening 28R is provided with a right door (right door panel 27R) (refer to FIGS. 3 and 5) to close the right entrance/exit opening 28R. Hereinafter, the left door panel 27L may be referred to as a left door 27L, and the right door panel 27R may be referred to as a right door 27R.

The left entrance/exit opening 28L is an opening surrounded by the left front pillar 13L, the left side beam 18L, the left rear pillar 14L, the left side lower frame 19L, and the left coupling frame 20L and opens leftward. The left entrance/exit opening 28L can be closed by the left door 27L. The left door 27L is supported on the left rear pillar 14L with two door hinges arranged in the top-bottom direction. The two door hinges arranged in the top-bottom direction include a first door hinge 29L located at the upper portion of the left rear pillar 14L and a second door hinge 30L located below the first door hinge 29L. In other words, the left door 27L is configured to open and close the left entrance/exit opening 28L when a front end of the left door 27L is swung in the left-right direction relative to a rear end thereof at which the first door hinge 29L and the second door hinge 30L are provided.

The right entrance/exit opening 28R is an opening surrounded by the right front pillar 13R, the right side beam 18R, the right rear pillar 14R, the right side lower frame 19R, and the right coupling frame 20R and opens rightward. The right entrance/exit opening 28R can be closed by the right door 27R. The right door 27R is supported on the right rear pillar 14R with two door hinges arranged in the top-bottom direction. The two door hinges arranged in the top-bottom direction include a first door hinge 29R located at the upper portion of the right rear pillar 14R and a second door hinge 30R located below the first door hinge 29R. In other words, the right door 27R is configured to open and close the right entrance/exit opening 28R when a front end of the right door 27R is swung in the left-right direction relative to a rear end thereof at which the first door hinge 29R and the second door hinge 30R are provided.

The above-described left and right doors 27L and 27R each include a light-transmissive panel made of tempered glass, acrylic glass, or the like and are configured to secure good visibility from the interior of the cabin 1 to the outside of the vehicle.

As illustrated in FIG. 5, the cabin 1 according to the present example embodiment includes the front panel 31 at the front portion of the cabin frame 8 and a rear panel 32 at the rear portion of the cabin frame 8.

The front panel 31 is located between the left front pillar 13L and the right front pillar 13R arranged at a distance from each other in the left-right direction and is supported on the left and right sides by the left front pillar 13L and the right front pillar 13R. Additionally, an upper edge of the front panel 31 is fixed to the front beam 15 located above the front panel 31. Like the above-described left and right doors 27L and 27R, the front panel 31 is a light-transmissive panel made of tempered glass, acrylic glass, or the like and is configured to secure good visibility from the interior of the cabin 1 to the (front) outside of the vehicle.

The front panel 31 in the present example embodiment defines a curved surface bulging forward. In other words, when the front panel 31 is cut along a horizontal plane, a horizontal cross-section of the front panel 31 has an arc shape such that a central portion of the front panel 31 in the left-right direction protrudes forward relative to left and right ends thereof. Furthermore, when the front panel 31 is cut along a plane extending in the top-bottom direction, a vertical cross-section of the front panel 31 has an arc shape such that a central portion of the front panel 31 in the top-bottom direction protrudes forward relative to upper and lower ends thereof. The front panel 31 defining a curved surface bulging forward achieves improved visibility from the interior of the cabin 1 toward the front outside of the vehicle, particularly downward.

The cabin 1 of the present invention includes the following features.

As illustrated in FIGS. 2, 5, and 7, the cabin 1 according to the present example embodiment includes the front panel 31 located in front of the operator's seat 6, the rear panel 32 located behind the operator's seat 6, and a rear lower panel 200 located behind and below (rearward and downward of) the operator's seat 6. Each of the rear panel 32 and the rear lower panel 200 is made of a light-transmissive material, such as tempered glass or acrylic glass, and has a plate-like shape that curves toward the outside of the vehicle. The rear panel 32 and the rear lower panel 200 are arranged in the top-bottom direction. The rear lower frame 17 is located between the rear panel 32 and the rear lower panel 200. The rear lower frame 17 extends in the left-right direction between the rear panel 32 and the rear lower panel 200.

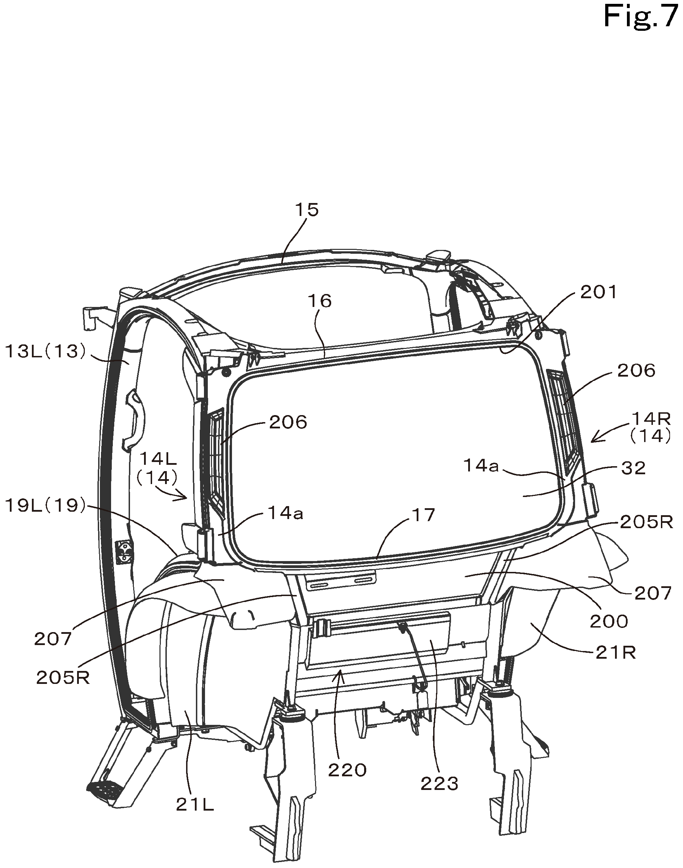

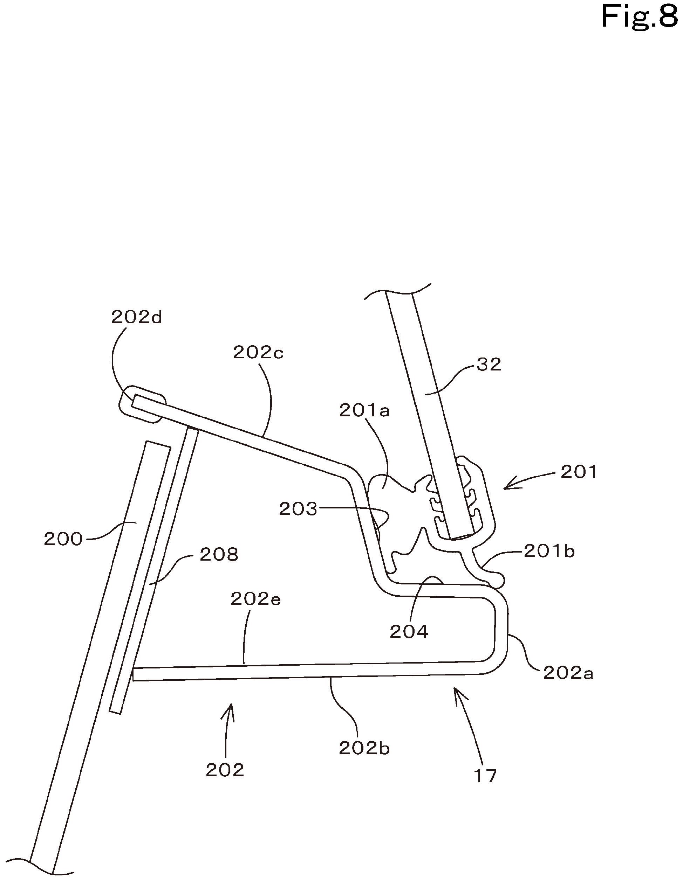

As illustrated in FIG. 7, a weatherstrip 201 is provided around (an outer edge of) the rear panel 32. As illustrated in FIG. 8, the weatherstrip 201 is of a double-lip type including a main lip 201a and a sub-lip 201b. The weatherstrip 201 is provided along the entire outer edge of the rear panel 32. In other words, the weatherstrip 201 is located between the rear panel 32 and the rear lower frame 17 provided below the rear panel 32. Additionally, the weatherstrip 201 is located between the rear panel 32 and each of the rear pillars 14 provided to the left and right of the rear panel 32.

The rear pillars 14 are located to the left and right of the rear panel 32. The rear pillars 14 include the left rear pillar 14L located to the left of the rear panel 32 and the right rear pillar 14R located to the right of the rear panel 32. The lower portion of the left rear pillar 14L is joined to a left end of the rear lower frame 17. The lower portion of the right rear pillar 14R is joined to a right end of the rear lower frame 17.

As illustrated in FIG. 8, the rear lower frame 17 includes a stepped member 202. The stepped member 202 protrudes rearward in a stepped manner. The stepped member 202 includes a front opening.

As illustrated in FIG. 8, the stepped member 202 in the present example embodiment includes a stepped rear portion whose surface includes a first seal face 203 facing rearward and a second seal face 204 facing upward. The first seal face 203 of the stepped member 202 is in contact with the main lip 201a of the weatherstrip 201. The second seal face 204 is in contact with the sub-lip 201b of the weatherstrip 201.

More specifically, the stepped member 202 includes a protruding end face 202a protruding rearward, a lower face 202b adjoining a front portion of the protruding end face 202a and facing downward, the second seal face 204 adjoining the front portion of the protruding end face 202a and facing upward, the first seal face 203 adjoining a front portion of the second seal face 204 and facing rearward, and an upper face 202c adjoining a front portion of the first seal face 203 and facing upward.

The main lip 201a of the weatherstrip 201 is in contact with the first seal face 203 of the stepped member 202, and the sub-lip 201b of the weatherstrip 201 is in contact with the second seal face 204 of the stepped member 202, thus providing sealing. This can improve the sealing performance between the stepped member 202 and the rear panel 32. Furthermore, the main lip 201a blocks rainwater that has passed over the sub-lip 201b of the weatherstrip 201 and tends to enter the interior on an inner side of the rear panel 32. Additionally, because the rear lower frame 17 is curved downward as will be described later, rainwater that has passed over the sub-lip 201b flows downward along the curve through a space defined between the main lip 201a and the sub-lip 201b. This curve allows rainwater that has entered the space to flow downward immediately.

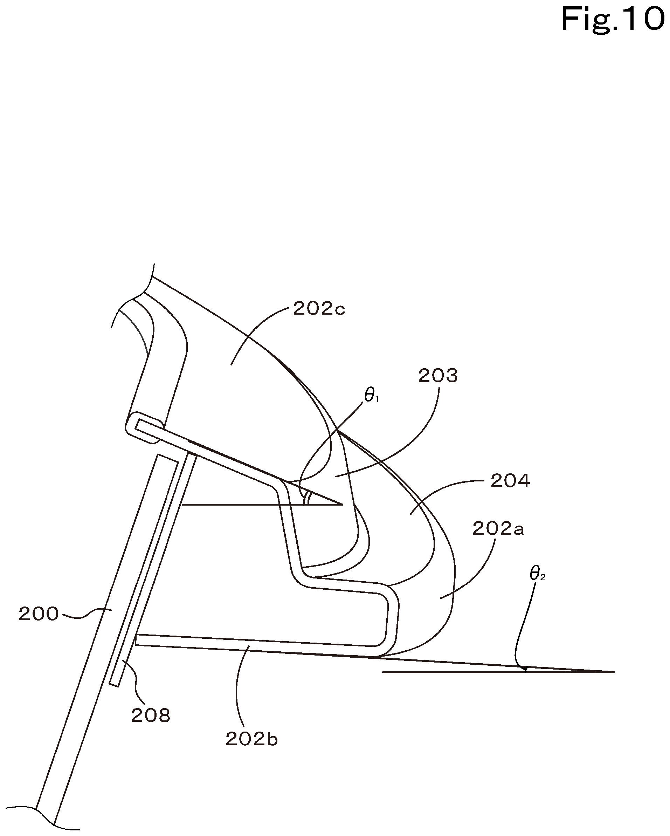

As illustrated in FIG. 10, the upper face 202c of the stepped member 202 is an inclined face that slopes downward and rearward. The upper face 202c of the rear lower frame 17, which supports a lower portion of the rear panel 32, provided as an inclined face sloping rearward allows a rearward field of view through the rear panel 32, particularly a rearward and downward field of view, to be provided to the driver (operator OP). The lower face 202b of the stepped member 202 is also an inclined face that slopes downward and rearward. Where θ1 is the angle of inclination of the upper face 202c relative to the horizontal direction and θ₂ is the angle of inclination of the lower face 202b relative to the horizontal direction, θ₂ > θ₁ is satisfied.

The stepped member 202 with the above-described shape (stepped shape with a front opening) is formed from a metal sheet by sheet-metal processing. More specifically, the stepped member 202 is formed by subjecting a metal sheet to press working (specifically, drawing). In other words, the rear lower frame 17, which is the stepped member 202, is formed by subjecting a metal sheet to press working (drawing). Therefore, the shape of the rear lower frame 17 can be easily adjusted during processing. Specifically, the degree of curvature of the rear lower frame 17, which has a curved shape as will be described later, can be easily adjusted during processing.

In the related-art cabin, the rear lower frame is a rectangular metal tube. When the rear lower frame is formed in a curved shape, the highly rigid rectangular tube needs to be bent. It is therefore difficult to adjust the degree of curvature of such a rear lower frame. In particular, it is difficult to vary the degree of curvature (radius of curvature) depending on the portion of the rear lower frame.

In contrast, the rear lower frame 17 of the cabin 1 of the present invention is the stepped member 202 formed by press working (drawing). Therefore, it is easy to adjust the degree of curvature of the rear lower frame 17 during processing. Thus, it is also easy to vary the degree of curvature (radius of curvature) depending on the portion of the rear lower frame 17.

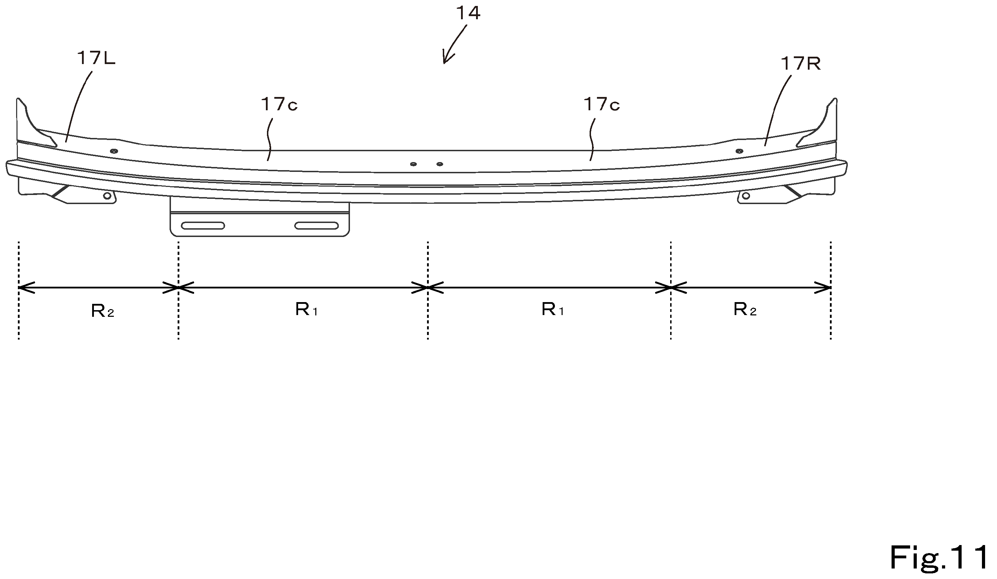

As illustrated in FIG. 11, the rear lower frame 17 is curved downward such that a central portion 17C is positioned lower than opposite end portions in the left-right direction (a left end portion 17L and a right end portion 17R). The rear lower frame 17 is curved not only so as to protrude downward, but also such that the radius of curvature varies depending on the position in the left-right direction. In other words, the rear lower frame 17 has a downward curvature in which the radius of curvature varies depending on the position in the left-right direction.

Specifically, the rear lower frame 17 includes the central portion 17C having a first radius of curvature R₁ and the end portions (the left end portion 17L and the right end portion 17R) having a second radius of curvature R₂. In FIG. 11, R₁ indicates the range of the central portion 17C having the first radius of curvature R₁, and R₂ indicates the range of each end portion having the second radius of curvature R₂. The central portion 17C, the left end portion 17L, and the right end portion 17R have different predetermined lengths in the left-right direction. The length of the central portion 17C in the left-right direction is greater than the length of each of the left end portion 17L and the right end portion 17R in the left-right direction. The first radius of curvature R₁ and the second radius of curvature R₂ are different from each other (R₁ # R₂). Specifically, the first radius of curvature R₁ is greater than the second radius of curvature R₂ (R₁ > R₂).

As described above, the radius of curvature of the downward curvature of the rear lower frame 17 is varied depending on the position in the left-right direction, and in particular, the first radius of curvature R₁ is greater than the second radius of curvature R₂. This allows the rear lower frame 17 to be provided at a gentler angle relative to the rear pillars 14 (that is, the degree of curvature of the rear lower frame 17 to increase toward the center of the rear panel 32). This avoids significant deformation of the weatherstrip 201 provided across the rear lower frame 17 and the rear pillars 14, thus preventing a reduction in sealing performance in the vicinity of the boundary between the rear lower frame 17 and each of the rear pillars 14.

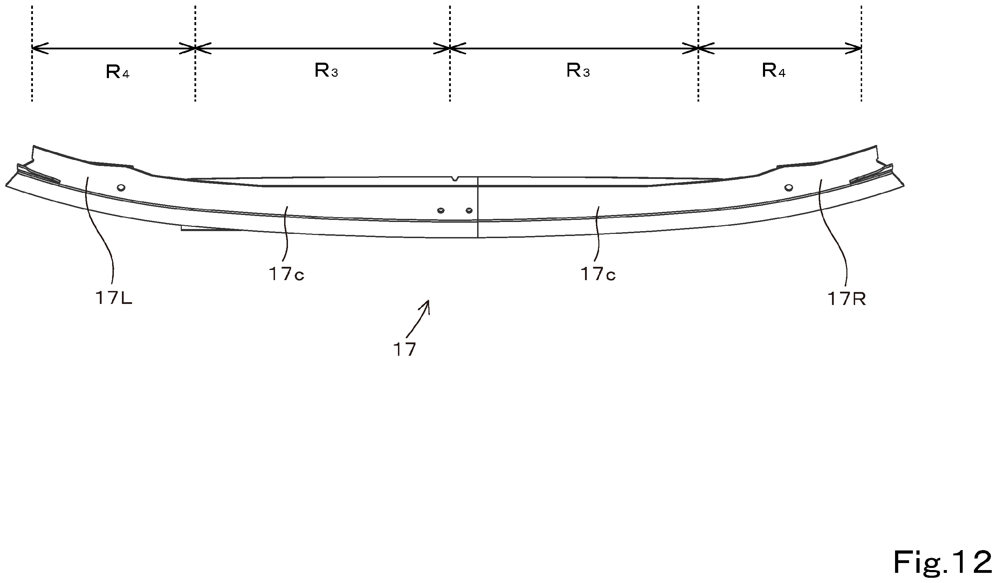

As illustrated in the plan view of FIG. 12, the rear lower frame 17 is curved such that the central portion 17C protrudes rearward relative to the opposite end portions in the left-right direction (the left end portion 17L and the right end portion 17R). The rear lower frame 17 is curved not only so as to protrude rearward, but also such that the radius of curvature varies depending on the position in the left-right direction. In other words, the rear lower frame 17 has a rearward curvature in which the radius of curvature varies depending on the position in the left-right direction.

Specifically, the rear lower frame 17 includes the central portion 17C having a first radius of curvature R₃ and the end portions (the left end portion 17L and the right end portion 17R) having a second radius of curvature R₄. The central portion 17C, the left end portion 17L, and the right end portion 17R have different predetermined lengths in the left-right direction. The length of the central portion 17C in the left-right direction is greater than the length of each of the left end portion 17L and the right end portion 17R in the left-right direction. The first radius of curvature R₃ and the second radius of curvature R₄ are different from each other (R₃ ≠ R₄). Specifically, the first radius of curvature R₃ is greater than the second radius of curvature R₄ (R₃ > R₄).

As described above, the radius of curvature of the rearward curvature of the rear lower frame 17 is varied depending on the position in the left-right direction. This enables the rear lower frame 17 to accommodate cabins having different dimensions in the width direction. More specifically, changing the first radius of curvature R₃ of the central portion 17C enables the position of the operator's seat in the front-rear direction to be adjusted to accommodate cabins having different dimensions in the width direction.

Specifically, as the dimension of the cabin 1 in the width direction increases, the length of the rear lower frame 17 in the left-right direction is increased, and the first radius of curvature R₃ of the central portion 17C is reduced. Reducing the first radius of curvature R₃ of the central portion 17C allows the central portion 17C to protrude farther rearward than the end portions (the left end portion 17L and the right end portion 17R). Thus, the space in the cabin increases in the front-rear direction, so that the position of the operator's seat can be shifted rearward. Therefore, if the cabin 1 is a large cabin having a large dimension in the width direction, the internal space of the cabin can be increased not only in the left-right direction (width direction) but also in the front-rear direction, and the position of the operator's seat in the front-rear direction can be optimized.

Additionally, the second radius of curvature R₄ of the end portions (the left end portion 17L and the right end portion 17R) of the rear lower frame 17 can also be changed to accommodate cabins 1 having different dimensions in the width direction. Even when the first radius of curvature R₃ is changed, changing the second radius of curvature R₄ independently of the first radius of curvature R₃ allows adjustment such that the end portions of the rear lower frame 17 and the rear pillars 14 are smoothly connected. This makes it possible to use common rear pillar covers 206 and common fender covers 207 for cabins 1 having different dimensions in the width direction.

As described above, the rear lower frame 17 is configured such that the radius of curvature of the downward curvature and the radius of curvature of the rearward curvature vary depending on the position in the left-right direction. Since the rear lower frame 17 is the stepped member 202, such a shape of the rear lower frame 17 in which the radii of curvature vary can be easily achieved while securing sufficient strength (rigidity) and sufficient sealing performance for the rear lower frame 17.

As illustrated in FIG. 8, the front opening of the stepped member 202 is closed by a supporting plate 208. The supporting plate 208 is inclined rearward as it extends downward. An upper end of the supporting plate 208 is joined to a rear side of the upper face 202c of the stepped member 202. Additionally, the supporting plate 208 supports an upper portion of the rear lower panel 200. A front face of a lower portion of the supporting plate 208 is joined to a rear end of the lower face 202b of the stepped member 202. As described above, the supporting plate 208 supports the upper portion of the rear lower panel 200 and closes the front opening of the stepped member 202.

An upper portion of the supporting plate 208 is joined from below to an upper plate portion 202d including the upper face 202c of the stepped member 202. Additionally, the lower portion of the supporting plate 208 is joined to a front end of a lower plate portion 202e including the lower face 202b of the stepped member 202. Thus, the supporting plate 208 closes the front opening of the stepped member 202.

As described above, the rear lower frame 17 is defined by the stepped member 202, and the supporting plate 208 is joined to the stepped member 202 to close the front opening of the stepped member 202. This leads to enhanced rigidity (strength) of the rear lower frame 17. Additionally, the supporting plate 208, which is a member supporting the upper portion of the rear lower panel 200, is also used as a member for enhancing the rigidity of the rear lower frame 17. Thus, a small number of components can provide support for the rear lower panel 200 and achieve enhanced rigidity of the rear lower frame 17.

As illustrated in FIG. 7, the rear pillars 14 are located to the left and right of the rear panel 32. The rear pillars 14 include the left rear pillar 14L located to the left of the rear panel 32 and the right rear pillar 14R located to the right of the rear panel 32. The rear pillars 14 are provided with the rear pillar covers 206 covering rear faces of the rear pillars 14.

As described above, the weatherstrip 201 includes the main lip 201a and the sub-lip 201b. A lip distal end of the main lip 201a and a lip distal end of the sub-lip 201b face in directions intersecting each other (see FIG. 8). Specifically, the main lip 201a extends forward and rearward, and the sub-lip 201b extends downward.

For the rear lower frame 17 illustrated in FIG. 8, the main lip 201a is in contact with the first seal face 203 facing rearward, and the sub-lip 201b is in contact with the second seal face 204 facing upward. The weatherstrip 201 is in contact not only with the rear lower frame 17 but also with the rear pillars 14.

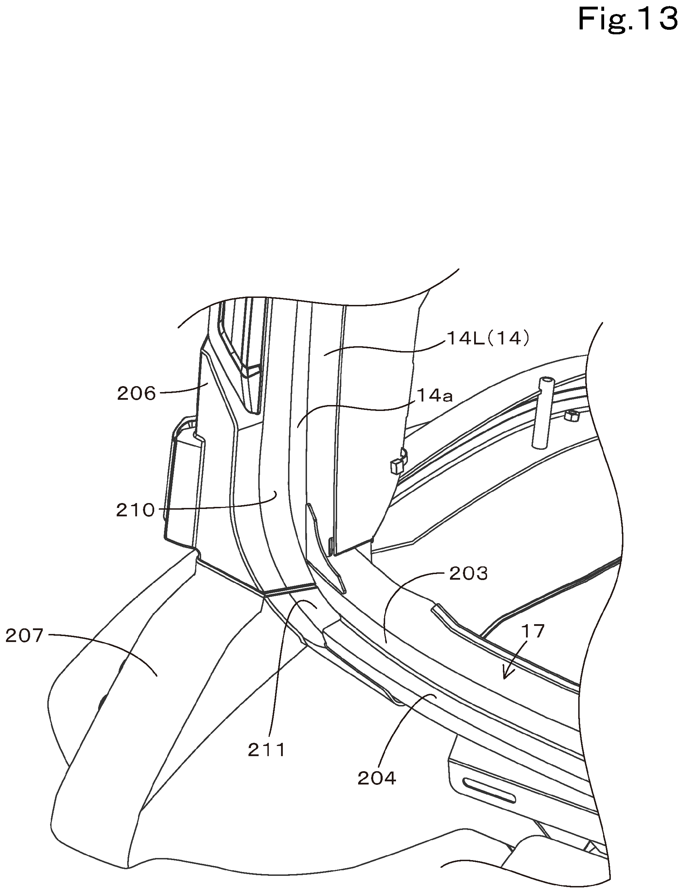

As illustrated in FIG. 13, a rear face 14a of each of the rear pillars 14 is flush with the first seal face 203 of the rear lower frame 17. Therefore, the main lip 201a of the weatherstrip 201 provided across the rear pillar 14 and the rear lower frame 17 is in contact with the first seal face 203 of the rear lower frame 17 and the rear face 14a of the rear pillar 14. In this case, since the rear face 14a of the rear pillar 14 is flush with the first seal face 203 of the rear lower frame 17 as described above, the main lip 201a is in continuous contact with the first seal face 203 of the rear lower frame 17 and the rear face 14a of the rear pillar 14. Thus, a good sealing condition can be obtained even at the boundary between the rear pillar 14 and the rear lower frame 17.

However, the sub-lip 201b of the weatherstrip 201 includes no portion configured to be in contact with the rear pillars 14. In the cabin 1 according to the present example embodiment, therefore, the rear pillar covers 206 each include a third seal face 210 with which the sub-lip 201b of the weatherstrip 201 is in contact. The third seal face 210 is curved inward in the width direction as it extends downward. More specifically, the third seal face 210 is a curved face that transitions from a face facing inward in the width direction to a face facing upward.

Depending on the machine type, the rear lower frame 17 and each of the rear pillar covers 206 may be spaced apart from each other in the left-right direction such that the frame and the cover do not adjoin each other. For example, in the cabin 1 according to the present example embodiment, as illustrated in FIG. 13, the fender cover 207 covering a rear portion of the fender 21 is located between the rear pillar cover 206 and the rear lower frame 17. In such a case, an upper portion of the fender cover 207 includes a fourth seal face 211 with which the sub-lip 201b of the weatherstrip 201 is in contact.

The second seal face 204 and the third seal face 210 described above are arranged along a curve having a single radius of curvature. Additionally, the second seal face 204 and the fourth seal face 211 are also arranged along a curve having a single radius of curvature. Since the second seal face 204 and the third seal face 210, and the second seal face 204 and the fourth seal face 211, are arranged along a curve having a single radius of curvature, the second seal face 204, the fourth seal face 211, and the third seal face 210 are arranged in sequence along the single curve. This can prevent or reduce excessive deformation of the weatherstrip 201 located in contact with the second seal face 204, the fourth seal face 211, and the third seal face 210, thus preventing a reduction in sealing performance. Additionally, for sealing portions of the weatherstrip, the main lip and the sub-lip of the weatherstrip can be arranged along a curve having a single radius of curvature. This can prevent or reduce excessive deformation of the sealing portions, thus preventing a reduction in sealing performance.

When the second seal face 204 and the third seal face 210 are arranged along a curve having a single radius of curvature, the radius of curvature of the curve may be, for example, 80 to 120 mm (specifically, approximately 100 mm). Such a radius of curvature can prevent or reduce excessive deformation of the weatherstrip 201, thus preventing a reduction in sealing performance.

To arrange the second seal face 204 and the third seal face 210 along such a curve, it is necessary that the angle (interior angle) of a joint portion where the rear lower frame 17 is joined to the rear pillar 14 be more obtuse (larger) than an angle close to a right angle. For that purpose, it is necessary to appropriately adjust the radius of curvature of opposite left and right end portions of the second seal face 204. Such adjustment can be easily performed because the shape of curvature of the rear lower frame 17 can be easily adjusted as described above.

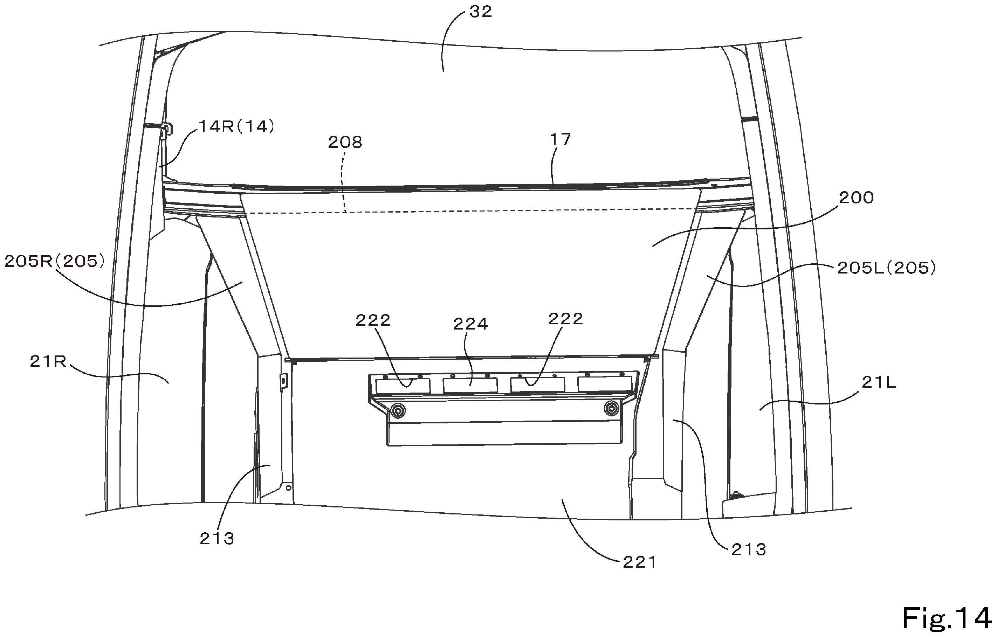

FIG. 14 is a diagram illustrating a rear portion of the operator's seat 6 as viewed from the front. As illustrated in FIG. 14, a pair of side frames 205L and 205R are located to the left and right of the rear lower panel 200 provided behind and below the operator's seat 6. Hereinafter, the side frames 205L and 205R may be collectively referred to as side frames 205.

A lower end of the left side frame 205L is coupled to an upper end of a base frame 213 provided at a left end of a rear wall portion 221 of the cabin 1. The left side frame 205L extends rearward and upward from the upper end of the base frame 213 while being inclined leftward. An upper end of the left side frame 205L is joined to a lower portion of the left end portion of the rear lower frame 17.

A lower end of the right side frame 205R is coupled to an upper end of a base frame 213 provided at a right end of the rear wall portion 221 of the cabin 1. The right side frame 205R extends rearward and upward from the upper end of the base frame 213 while being inclined rightward. An upper end of the right side frame 205R is joined to a lower portion of the right end portion of the rear lower frame 17.

In other words, the left side frame 205L extends upward while being inclined leftward, whereas the right side frame 205R extends upward while being inclined rightward. In other words, the pair of side frames 205L and 205R are arranged so as to diverge rearward and upward.

A right portion of the left side frame 205L supports a left end of the rear lower panel 200. Except for the upper portion of the rear lower panel 200 supported by the supporting plate 208, the entire left end of the rear lower panel 200 from a lower end to an upper end thereof in the top-bottom direction is supported by the right portion of the left side frame 205L. Additionally, a left portion of the right side frame 205R supports a right end of the rear lower panel 200. Except for the upper portion of the rear lower panel 200 supported by the supporting plate 208, the entire right end of the rear lower panel 200 from the lower end to the upper end thereof in the top-bottom direction is supported by the left portion of the right side frame 205R.

As described above, the pair of side frames 205L and 205R support the entire left and right ends of the rear lower panel 200 in the top-bottom direction. Thus, the left and right ends of the rear lower panel 200 diverge rearward and upward. This allows the field of view through the rear lower panel 200 to extend to upper left and right corners (opposite upper corners), thus securing a rearward field of view through the opposite upper corners of the rear lower panel 200. This achieves a wide rearward field of view.

Arrangement of the pair of side frames 205L and 205R diverging rearward and upward to achieve a wide rearward field of view leads to insufficient strength of the rear frame structure. It is necessary to reinforce the rear frame structure. In the cabin 1 according to the present example embodiment, therefore, the rear frame structure is reinforced as described in (1) to (4) below.
(1) The pair of side frames 205L and 205R each have a reverse-tapered shape such that the upper end has a larger width in the left-right direction than the lower end.
   Each of the above-described pair of side frames 205L and 205R is a frame member whose width increases in a reverse-tapered manner such that the upper end has a larger width in the left-right direction than the lower end coupled to the base frame 213. Using the pair of side frames 205L and 205R each having a width increasing in a reverse-tapered manner allows an increase in the area of junction between each side frame and the rear lower panel 200, thus enhancing the strength of the rear frame structure.
(2) The lower ends of the rear pillars 14 and the upper ends of the side frames 205 are joined to the left and right end portions of the rear lower frame 17.

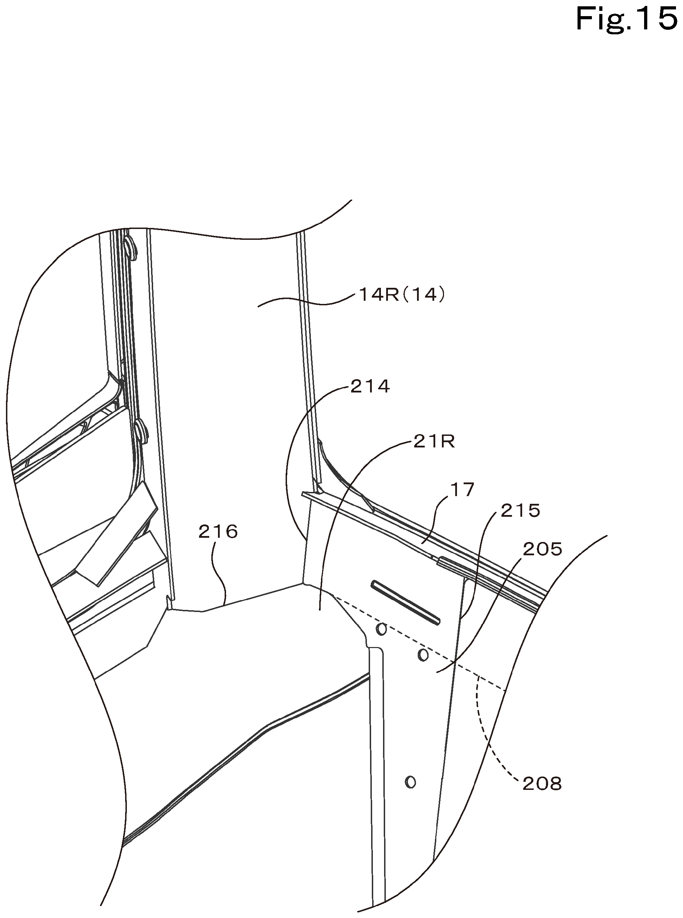

As illustrated in FIG. 14, the upper ends of the side frames 205 are joined to the left and right end portions of the rear lower frame 17, and the opposite ends of the rear lower frame 17 in the left-right direction are joined to the respective lower portions of the left rear pillar 14L and the right rear pillar 14R. Specifically, as illustrated in FIG. 15, the upper end of the right side frame 205 is joined from below to the right end portion 17R of the rear lower frame 17. The right rear wheel fender 21R is located at a left portion of the right side frame 205, and the right rear pillar 14R is joined to a left portion of the right rear wheel fender 21R. In other words, the lower end of the right rear pillar 14R and the upper end of the right side frame 205R are joined to the right end portion 17R of the rear lower frame 17. The above description relates to a joint structure including the right end portion 17R of the rear lower frame 17. As for the left end portion 17L of the rear lower frame 17, the lower end of the left rear pillar 14L and the upper end of the left side frame 205L are also joined to the left end portion 17L of the rear lower frame 17.

As described above, the lower ends of the rear pillars 14 and the upper ends of the side frames 205 are joined to the opposite left and right end portions of the rear lower frame 17. Thus, the joint portion with the lower end of each rear pillar 14 and the joint portion with the upper end of the corresponding side frame 205 are close to or next to each other in the left-right direction of the rear lower frame 17. This makes the rear lower frame 17 less likely to bend than in a case where the joint portion with the lower end of each rear pillar 14 and the joint portion with the upper end of the corresponding side frame 205 are spaced apart from each other in the left-right direction. This leads to enhanced strength of the rear frame structure.

Preferably, the joint portion at which the upper end of the side frame 205 is joined to the rear lower frame 17 and the joint portion at which the lower portion of the rear pillar 14 is joined to the rear lower frame 17 are located as close to each other as possible in the left-right direction. In other words, in the most preferred joint structure, the upper end of the side frame 205 is positioned adjacent to the lower portion of the rear pillar 14 in the left-right direction. Such a configuration allows the strength of the frame structure, in which the side frames 205, the rear lower frame 17, and the rear pillars 14 are joined together, to be improved to the greatest extent.

(3) As illustrated in FIG. 15, the supporting plate 208 (refer to FIG. 8) closing the front opening of the stepped member 202 is joined to both the side frame 205 and the rear pillar 14.

The supporting plate 208 is joined to the rear pillar 14 along a first joining line 214 and is joined to the side frame 205 along a second joining line 215.

As described above, the supporting plate 208 is positioned to close the front opening of the stepped member 202 and is joined to both the side frame 205 and the rear pillar 14. This leads to enhanced strength of the rear lower frame 17.

(4) The fenders 21 (the left rear wheel fender 21L and the right rear wheel fender 21R), which are curved rearward and upward, are located outward of the side frames 205 in the left-right direction. Rear ends of the fenders 21 are joined to the lower portions of the rear pillars 14. The stepped member 202 is joined to the rear ends of the fenders 21.

As illustrated in FIG. 15, the right rear wheel fender 21R is located to the left of the right side frame 205R. A third joining line 216 is provided at the rear end of the right rear wheel fender 21R. The rear end of the right rear wheel fender 21R is joined to the right rear pillar 14R along the third joining line 216.

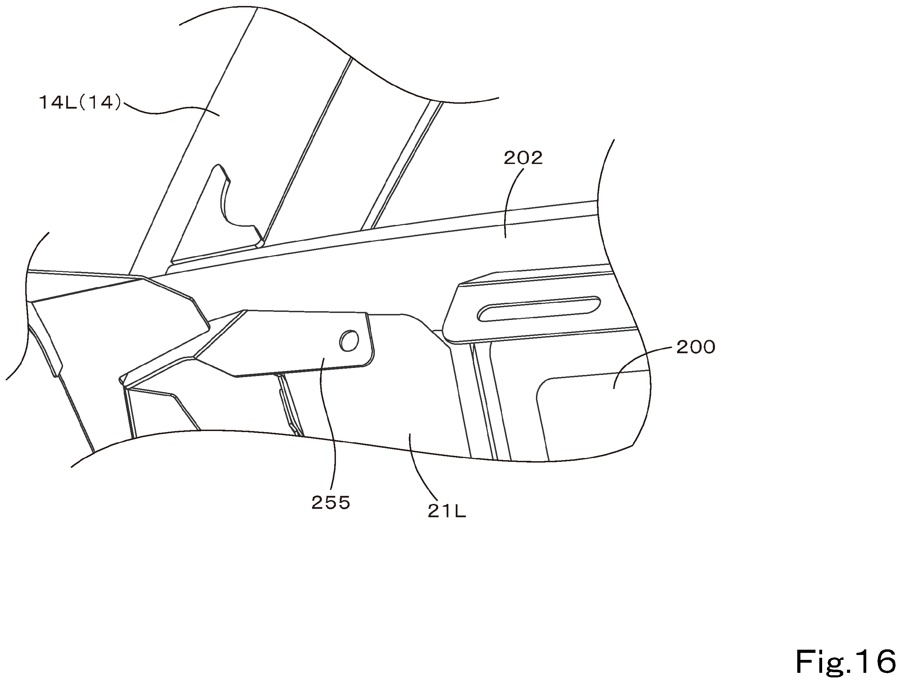

As illustrated in FIG. 16, a left end portion of the stepped member 202 is joined to the rear end of the left rear wheel fender 21L, with a welding piece 255 therebetween.

Joining the left rear wheel fender 21L to the stepped member 202 in the above-described manner allows four members, namely the rear pillar 14, the side frame 205, the rear lower frame 17, and the fender 21, to be joined with high strength.

Additionally, an upper face of the rear portion of the above-described fender 21 defines an inclined face that slopes upward and outward in the left-right direction. In other words, a space that allows the rearward field of view to be secured is provided above the upper faces of the fenders 21, namely, above the rear portions of the fenders 21. The rearward field of view can be easily secured through the space.

In a working machine such as the tractor 2, when the left door 27L or the right door 27R is closed, the pressure in the space inside the cabin 1 may temporarily increase, and the increased pressure in the cabin 1 may cause problems, such as the closed door 27 opening against the intention of the operator. To avoid such pressure fluctuations in the cabin interior, the cabin 1 of the present invention includes a vent system 220 configured to discharge air inside the cabin 1 to the outside when the pressure (air pressure) in the cabin 1 exceeds a predetermined pressure.

As illustrated in FIG. 14, the vent system 220 includes a machine-body wall provided around the operator's seat 6, air vent holes 222 in the machine-body wall, and a water-blocking cover 223 (refer to FIG. 7) attached to the machine-body wall. The machine-body wall refers to a front wall, a left or right side wall, or a rear wall portion provided around the operator's seat 6. Which of the front wall, the left and right side walls, and the rear wall portion is provided with the vent system 220 varies depending on the machine type. When the machine body 3 includes a front wall, left and right side walls, and a rear wall portion, the air vent holes 222 may be provided in any one of those walls. In the present example embodiment, the cabin 1 is illustrated as including, as the machine-body wall, the rear wall portion 221 located behind the operator's seat 6 and provided with the air vent holes 222.

In other words, the vent system 220 in the present example embodiment includes the rear wall portion 221 located behind the operator's seat 6, and the air vent holes 222 are provided in the rear wall portion 221.

As illustrated in FIG. 14, the vent system 220 in the present example embodiment includes the air vent holes 222 provided in the rear wall portion 221 and the water-blocking cover 223 (refer to FIG. 7) provided on the rear wall portion 221. The rear wall portion 221 is provided with closure plates 224 to close the air vent holes 222.

The air vent holes 222, the water-blocking cover 223, and the closure plates 224 included in the vent system 220 of the present invention will now be described.

As illustrated in FIGS. 2 and 14, the rear wall portion 221 is a machine-body wall located behind the operator's seat 6. The rear wall portion 221 is inclined rearward and downward. An upper portion of the rear wall portion 221 includes a recess 225 recessed rearward and downward. The air vent holes 222 are provided in the recess 225. As described above, the air vent holes 222 are provided in the rear wall portion 221 located rearward of the operator's seat 6, where interference with other devices is least likely to occur among the front, rear, left, and right sides of the operator's seat 6. This can prevent or reduce a large fluctuation in pressure (a sudden increase in pressure) in the cabin 1 when the door is closed without a reduction in operability or occupant comfort in the cabin 1.

As illustrated in FIG. 14, each of the air vent holes 222 is a transversely elongated rectangular opening when viewed from the front. The multiple (in the present example embodiment, four) air vent holes 222 are arranged in the left-right direction in the rear wall portion 221.

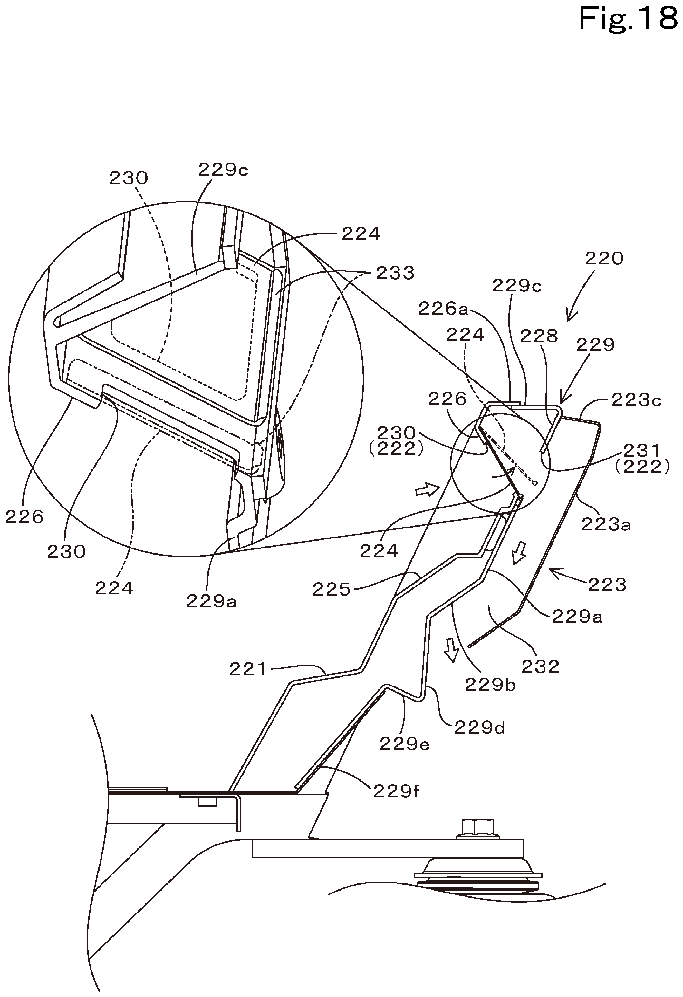

As illustrated in FIG. 18, the rear wall portion 221 includes the recess 225, which is recessed in a trapezoidal shape in side view. An upper portion of the recess 225 includes an inclined wall portion 226 that slopes upward and forward. The inclined wall portion 226 includes the air vent holes 222. Additionally, the recess 225 is provided over an area extending from the left end of the rear wall portion 221 to a right portion thereof (an area corresponding to approximately three-quarters of the entire width of the rear wall portion 221 in the left-right direction) and allows air inside the cabin 1 to be released over a wide area.

Allowing air to escape from the interior of the cabin 1 through the air vent holes 222 prevents or reduces problems such as a large pressure fluctuation (a sudden increase in pressure) in the interior when the door is closed and push-back of the door caused by the large pressure fluctuation.

Each of the closure plates 224 is a plate capable of closing the opening of the air vent hole 222. The closure plate 224 is made of, for example, rubber or synthetic resin. In the present example embodiment, the closure plate 224 is made of rubber. An upper end, or upper end portion, of the closure plate 224 is located above the air vent hole 222 and is secured to the rear wall portion 221. More specifically, the upper end of the closure plate 224 is secured, by means such as riveting or bonding, to the inclined wall portion 226 located slightly above the opening of the air vent hole 222, and the closure plate 224 covers the air vent hole 222 on an upper face of the inclined wall portion 226. A portion of the closure plate 224 that is below the secured upper end thereof is swingable (deformable) upward. The closure plate 224 swings upward about the upper end portion when the pressure in the cabin 1 exceeds a predetermined pressure.

When the pressure in the cabin 1 is lower than the predetermined pressure, the closure plate 224 does not swing. Therefore, the closure plate 224 remains covering the air vent hole 222 on the upper face of the inclined wall portion 226 and closes the air vent hole 222. In other words, when the pressure in the cabin 1 is lower than the predetermined pressure, the closure plate 224 closes the air vent hole 222 under its own weight. When the pressure in the cabin 1 exceeds the predetermined pressure, a force acting on the closure plate 224 due to the pressure and tending to swing the closure plate 224 rearward and upward exceeds a force by which the closure plate 224 tends to close the air vent hole 222 under its own weight, so that the closure plate 224 swings rearward and upward to open the air vent hole 222.

The pressure (predetermined pressure) in the cabin 1 at which the closure plate 224 swings depends on the weight of the closure plate 224. If the closure plate 224 has a large weight, the pressure causing the closure plate 224 to swing needs to be high. If the closure plate 224 has a small weight, the pressure causing the closure plate 224 to swing may be low. Therefore, the pressure causing the closure plate 224 to swing can be set high by using a thick plate as the closure plate 224 or by using the closure plate 224 with a weight added to an upper face thereof or the like.

For example, when laws, regulations, or the like require the air pressure in the cabin 1 to be set relatively high, using the closure plate 224 formed from a thick plate or the closure plate 224 with an added weight enables the air pressure in the cabin 1 at which air is discharged by swinging of the closure plate 224 to be set relatively high.

Additionally, as long as the weight of the closure plate 224 is appropriately set, the closure plate 224 does not open merely when outside air is introduced by, for example, operating the air conditioner, so that cool air or warm air inside the cabin 1 is not unnecessarily discharged to the outside. When the door is closed, the closure plate 224 with the appropriately set weight allows the air inside the cabin 1 to escape to the outside, thus preventing or reducing a fluctuation (sudden increase) in air pressure in the cabin 1.

Additionally, the multiple closure plates 224 are respectively provided for the multiple air vent holes 222. More specifically, the multiple closure plates 224 are provided to individually close the respective air vent holes 222. Therefore, a subset of the closure plates 224 for the air vent holes 222 may have a weight different from that of the other closure plates 224. This enables the air vent holes 222 to be used in various manners such that, for example, when a fluctuation in pressure in the cabin 1 is small, a subset of the air vent holes 222 (corresponding to a small number of air vent holes 222) is opened, and when the fluctuation in pressure in the cabin 1 increases, not only the subset of the air vent holes 222 but also the other air vent holes 222 (a large number of air vent holes 222) are opened. Thus, the air inside the cabin 1 can be discharged individually through the respective air vent holes 222.

Although whether each closure plate 224 swings (opens) depends on the weight of the closure plate 224 itself in the present example embodiment, the pressure in the cabin 1 may be measured using a pressure gauge or the like, whether the measured pressure has reached the predetermined pressure may be determined by a controller or the like, and the closure plate 224 may be opened by driving a motor or the like based on the determination result.

Furthermore, the closure plate 224 includes, at a rear end thereof, a rib portion 233 extending in the left-right direction. The rib portion 233 provided on the closure plate 224 eliminates or reduces the likelihood that the closure plate 224 may warp or deform. This can avoid a problem in which the warped or deformed closure plate 224 may fail to reliably close the air vent hole 222.

The water-blocking cover 223 is positioned to cover the air vent holes 222. The water-blocking cover 223 defines, with the rear wall portion 221 (machine-body wall), a space opening downward.

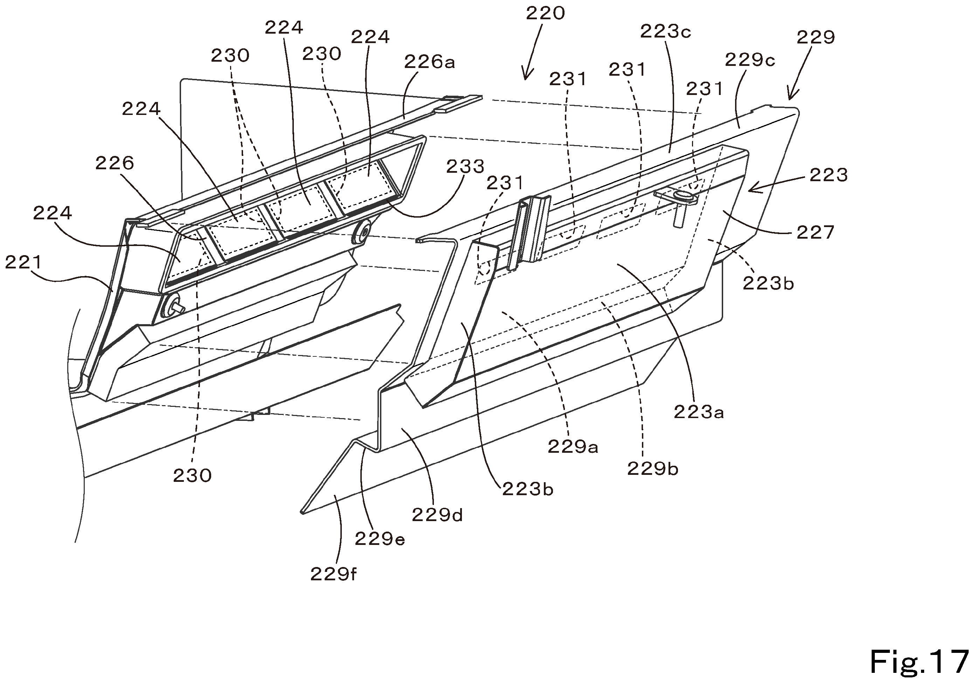

As illustrated in FIG. 17, the water-blocking cover 223 includes a back plate portion 223a, left and right side plate portions 223b, and an upper plate portion 223c. The back plate portion 223a is located behind and at a distance from the rear wall portion 221 (machine-body wall). The left and right side plate portions 223b extend forward from the left and right ends of the rear wall portion 221, respectively. The upper plate portion 223c connects an upper end of the rear wall portion 221 and the left and right side plate portions 223b.

A space defined between the water-blocking cover 223 and the rear wall portion 221 is covered on the upper side by the upper plate portion 223c, covered on the left and right sides by the left and right side plate portions 223b, covered on the rear side by the back plate portion 223a, and opens only on the lower side. A downwardly opening portion (lower end) of the water-blocking cover 223 is provided at a position lower than the air vent holes 222. This allows air in the cabin 1 that has entered the space through the air vent holes 222 to be discharged from the position lower than the air vent holes 222.

The reason why air is discharged from a position lower than the air vent holes 222 is as follows. If the air were discharged from a position at the same height as or higher than the air vent holes 222, rainwater, foreign matter, and the like could easily enter the air vent holes 222 through an air discharge portion defined by the water-blocking cover 223. In this respect, in a structure in which air is discharged from a position lower than the air vent holes 222, rainwater, foreign matter, and the like are less likely to enter the air vent holes 222. In other words, the water-blocking cover 223 provided to discharge air from a position lower than the air vent holes 222 can prevent water from entering the cabin 1 through the air vent holes 222.

Additionally, the water-blocking cover 223 can prevent or reduce entry of noise outside the vehicle into the cabin 1 as well as entry of water into the cabin 1.

As illustrated in FIG. 18, the rear wall portion 221 includes a rear plate portion 229 located behind the inclined wall portion 226. The rear plate portion 229 extends in the top-bottom direction behind the inclined wall portion 226. The air vent holes 222 include at least one first hole 230 provided in the inclined wall portion 226 and at least one second hole 231 provided in the rear plate portion 229. In FIG. 18, which is a longitudinal sectional view, a portion within a large circle is a perspective view illustrating the vicinity of the first hole 230 within a small circle in the longitudinal sectional view.

As illustrated in FIG. 17, a plurality of (in the present example embodiment, four) first holes 230 are arranged in the left-right direction in the rear wall portion 221. A plurality of (in the present example embodiment, four) second holes 231 are arranged in the left-right direction in the rear plate portion 229. Each of the second holes 231 is aligned with the corresponding one of the first holes 230 as viewed from the rear. In the present example embodiment, the closure plates 224 are secured to the inclined wall portion 226 above the first holes 230 to close the first holes 230. The second holes 231 are located behind the first holes 230. The second holes 231 are covered from the rear side by the water-blocking cover 223.

As described above, the rear plate portion 229 is provided behind the inclined wall portion 226 including the first holes 230, and the second holes 231 in the rear plate portion 229 are covered from the rear side by the water-blocking cover 223. This can prevent water and foreign matter from entering the cabin 1 from outside and also eliminate or reduce the likelihood that noise outside the vehicle may enter the cabin.

Furthermore, the rear plate portion 229 includes a first region 229a including the second holes 231 and a second region 229b located below the first region 229a and inclined forward and downward. Since the second region 229b inclined forward and downward is provided below the first region 229a including the second holes 231 as described above, washing water sprayed from the rear side during washing of the cabin is blocked by the inclined second region 229b and thus does not reach the second holes 231. Thus, washing water can be prevented from entering the cabin through the second holes 231.

The rear plate portion 229 further includes a third region 229c, a fourth region 229d, a fifth region 229e, and a sixth region 229f. The third region 229c extends forward from an upper end of the first region 229a. A front end of the third region 229c is connected to an upper extending portion 226a extending upward and rearward from an upper end of the inclined wall portion 226. The fourth region 229d extends downward and rearward from a lower end of the second region 229b at an angle to the second region 229b. The fifth region 229e extends forward and upward from a lower end of the fourth region 229d at an angle to the fourth region 229d. The sixth region 229f extends forward and downward from a lower end of the fifth region 229e at an angle to the fifth region 229e. The position of the lower end of the water-blocking cover 223 in the top-bottom direction coincides with the position of the fourth region 229d in the top-bottom direction. The first region 229a, the second region 229b, and the third region 229c are located above the lower end of the water-blocking cover 223.

The above-described configuration allows the water-blocking cover 223 to prevent most of the washing water sprayed from the rear side from entering the space inside the water-blocking cover 223. For washing water sprayed below the lower end of the water-blocking cover 223, some of the washing water that strikes the fourth region 229d splashes upward, and the washing water that has splashed upward strikes the second region 229b and falls. Of the washing water sprayed below the lower end of the water-blocking cover 223, washing water sprayed below the fourth region 229d strikes the fifth region 229e and falls.

As described above, not only the second region 229b but also the fifth region 229e functions to prevent washing water from moving upward toward the second holes 231, thus reliably preventing washing water from entering through the second holes 231. Additionally, since the rear plate portion 229 is bent at multiple locations as described above, the strength of the rear plate portion 229 can be improved as compared with a case in which the rear plate portion 229 is flat.

As illustrated in FIG. 18, the vent system 220 in the present example embodiment includes a ventilation passage 232 to discharge air to the outside of the cabin 1 through the first holes 230, the second holes 231, and the space defined between the water-blocking cover 223 and a rear face of the rear wall portion 221. The ventilation passage 232 is provided between the inclined wall portion 226 including the first holes 230 and the rear plate portion 229 including the second holes 231 and between the rear plate portion 229 and the water-blocking cover 223.

Air flows from the inside of the cabin 1 through the first holes 230 into the space between the inclined wall portion 226 and the rear plate portion 229, then flows through the second holes 231 into the space between the rear plate portion 229 and the water-blocking cover 223, and is then discharged to the outside from the space between the lower end of the water-blocking cover 223 and the rear plate portion 229.

As described above, the ventilation passage 232 is provided in the space covered by the water-blocking cover 223. Therefore, this allows the air inside the cabin to be discharged to the outside while preventing or reducing the entry of water and foreign matter into the cabin.

Preferably, the opening area of the second holes 231 and the flow area of the ventilation passage 232 defined between the water-blocking cover 223 and the rear face of the rear wall portion 221 are each set to be equal to or greater than the opening area of the first holes 230. If the opening area of the second holes 231 is less than the opening area of the first holes 230, the amount of air that can pass through the second holes 231 is less than the amount of air that can pass through the first holes 230, which may cause air stagnation. Additionally, if the flow area of the ventilation passage 232 defined between the water-blocking cover 223 and the rear face of the rear wall portion 221 is less than the opening area of the first holes 230, the amount of air that can flow through the ventilation passage 232 defined between the water-blocking cover 223 and the rear face of the rear wall portion 221 is less than the amount of air that can pass through the first holes 230, which may cause air stagnation.

If the opening area of the second holes 231 and the flow area of the water-blocking cover 223 are each set to be equal to or greater than the opening area of the first holes 230, such air stagnation can be prevented. Therefore, air can be smoothly guided along the ventilation passage 232 extending from the first holes 230 through the second holes 231 to the water-blocking cover 223, so that the air inside the cabin 1 can be reliably discharged to the outside.

Furthermore, each closure plate 224 and the inclined wall portion 226, to which the closure plate 224 is attached, are preferably inclined at an angle of 20 to 45 degrees relative to the horizontal direction. If the closure plate 224 and the inclined wall portion 226 are inclined at an angle of 20 to 45 degrees relative to the horizontal direction, the closure plate 224 will not be accidentally opened due to tilting of the vehicle provided with the cabin 1 even when the vehicle travels on a road surface inclined at an angle of 20 to 45 degrees relative to the horizontal direction. The angle of inclination is not limited to the range from 20 to 45 degrees and may be changed as appropriate.

The cabin 1 of the present invention includes the door panels 27L and 27R located to the sides of the operator's seat 6, the left and right side lower beams 19L and 19R (also referred to as the left and right side lower frames 19L and 19R) supporting rear portions of the door panels 27L and 27R from below and extending in an arc shape from upper ends of the rear portions toward lower ends of front portions of the door panels 27L and 27R, and the left and right coupling frames 20L and 20R supporting the front portions of the door panels 27L and 27R from below and extending forward from the lower ends of the left and right side lower beams 19L and 19R.

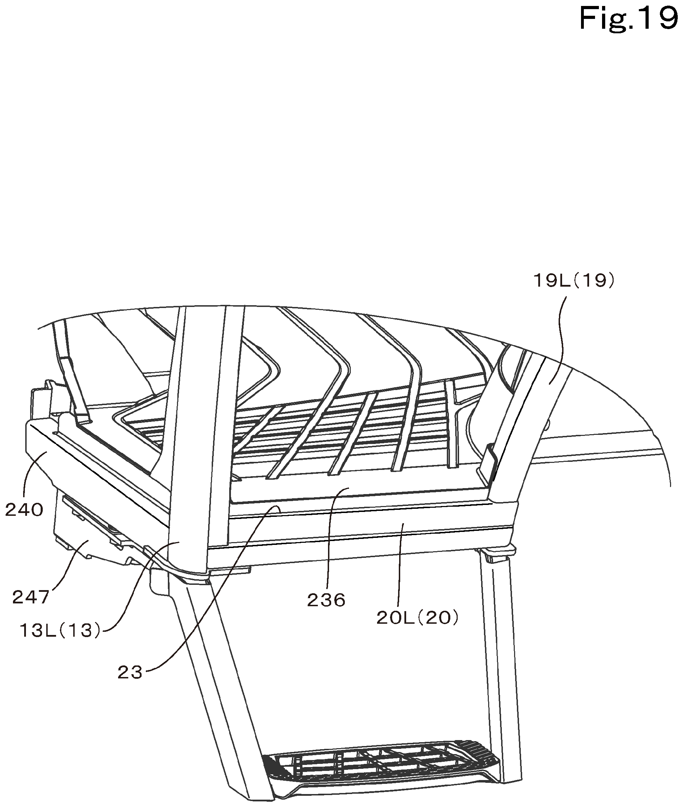

As illustrated in FIG. 19, the left coupling frame 20L is provided below the front portion of the left door panel 27L (refer to FIG. 1). The step 23 is provided to the right of the left coupling frame 20L. A step mat 236 is placed on the step 23 and the left coupling frame 20L.

A joint structure between the left coupling frame 20L and the left side lower beam 19L will be described below with reference to the drawings. The same applies to a joint structure between the right coupling frame 20R and the right side lower beam 19R, which are not illustrated.

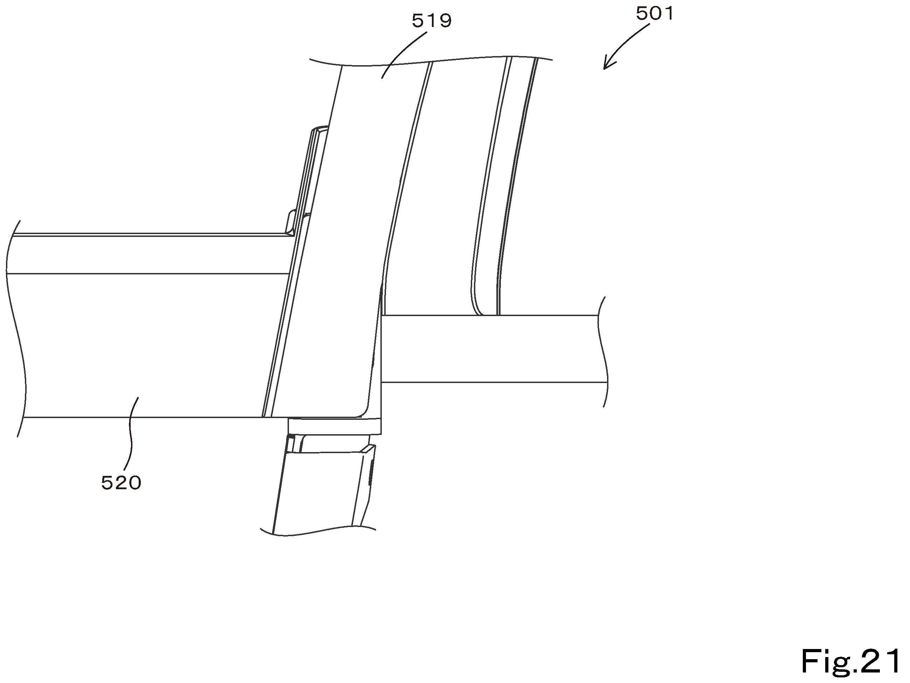

As illustrated in FIG. 21, in a related-art cabin 501, a coupling frame 520 coupling the front pillar 13 and a side lower beam 519 is in contact, from the front side, with and joined to a front face of a lower end portion of the side lower beam 519. In such a joint structure, the accuracy of joining the coupling frame 520 to the side lower beam 519 may vary due to dimensional tolerances in the length of the coupling frame 520. In other words, since the coupling frame 520 is joined, from the front side, to the front face of the lower end portion of the side lower beam 519, variations in the length (length in the front-rear direction) of the coupling frame 520 due to the dimensional tolerances cause the joining accuracy to vary.

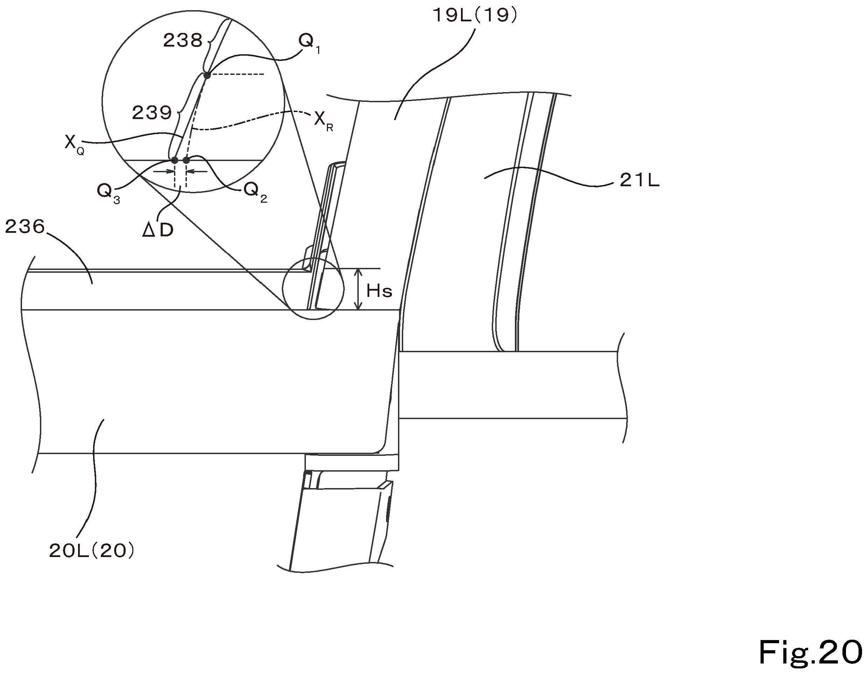

In contrast, as illustrated in FIG. 20, in the cabin 1 of the present invention, the lower end of the left side lower beam 19L is joined to an upper face of a rear portion of the left coupling frame 20L. Although not illustrated, the lower end of the right side lower beam 19R is joined to an upper face of a rear portion of the right coupling frame 20R.

As described above, the lower end of the left side lower beam 19L (the right side lower frame 19R) is joined to the upper face of the rear portion of the left coupling frame 20L (the right coupling frame 20R). This allows the accuracy of joining the left coupling frame 20L (the right coupling frame 20R) to the left side lower beam 19L (the right side lower frame 19R) to be less susceptible to the dimensional tolerances in the length of the coupling frame 520. This can improve the accuracy of joining the coupling frame 20L (the right coupling frame 20R) to the left side lower beam 19L (the right side lower frame 19R).

As illustrated in an enlarged portion (within a circle) in FIG. 20, a front edge of the side lower beam 19L includes a curved portion 238 curved in an arc shape and a straight portion 239 linearly extending forward and downward from a lower end of the curved portion 238 in a direction tangential to the arc of the curved portion 238. The lower end of the curved portion 238 is indicated by the point Q₁, and the tangent to the arc at the point Q₁ is indicated by X_{Q}. The portion provided below the point Q₁ along the tangent X_{Q} is the straight portion 239, and the portion above the point Q₁ is the curved portion 238.

In FIG. 20, the imaginary line X_{R} is a line representing a hypothetical extension of the curved portion 238 that extends downward from the point Q₁. The imaginary line X_{R} represents the front edge of the left side lower beam 19L when the straight portion 239 is not provided. The contact point Q₃, at which the straight portion 239 (the tangent X_{Q}) contacts the upper face of the coupling frame 20L, is located forward of the contact point Q₂, at which the imaginary line X_{R} contacts the upper face of the coupling frame 20L, by the length ΔD. The contact point Q₂ represents a contact point at which the front edge (the imaginary line X_{R}) of the side lower beam 19L contacts the coupling frame 20L when the straight portion 239 is not provided.

As described above, the contact point Q₃, at which the front edge of the left side lower beam 19L contacts the coupling frame 20L when the straight portion 239 is provided, is located forward of the contact point Q₂, at which the front edge of the left side lower beam 19L contacts the coupling frame 20L when the straight portion 239 is not provided. Thus, the area of contact between the left side lower beam 19L and the coupling frame 20L when the straight portion 239 is provided is larger than the area of contact between the left side lower beam 19L and the coupling frame 20L when the straight portion 239 is not provided.

This allows the area of sealed portions for the coupling frames 20L and 20R to be increased forward in the cabin 1 of the present invention, thus improving the strength with which the side lower beams 19L and 19R are joined to the coupling frames 20L and 20R. This leads to significantly improved strength of the side door frames.

A rear edge of each of the left side lower beam 19L and the right side lower beam 19R is curved in an arc shape rearward of the straight portion 239. Thus, a lower portion of each of the left side lower beam 19L and the right side lower beam 19R is shaped such that the distance between the front edge and the rear edge increases toward the lower end, which is joined to the corresponding one of the left coupling frame 20L and the right coupling frame 20R. This allows the area of contact between the left side lower beam 19L and the left coupling frame 20L and the area of contact between the right side lower beam 19R and the right coupling frame 20R to be sufficiently large, thus improving the strength with which the side lower beams 19L and 19R are joined to the coupling frames 20L and 20R.

Additionally, since the rear edge of each of the left side lower beam 19L and the right side lower beam 19R is curved in an arc shape rearward of the straight portion 239, a large distance (clearance) can be secured between the rear edge and each of the left rear wheel 12L and the right rear wheel 12R, as compared with a case in which the rear edge is a straight line parallel to the straight portion 239. Therefore, it is possible to accommodate left rear wheels 12L and right rear wheels 12R of various types (sizes).

As described above, the joint structures between the side lower beams 19L and 19R and the coupling frames 20L and 20R in the above-described example embodiment can improve the strength with which the side lower beams 19L and 19R are joined to the coupling frames 20L and 20R while securing a large distance (clearance) between each of the side lower beams 19L and 19R and the corresponding one of the left rear wheel 12L and the right rear wheel 12R.

The boundary Q₁ between the curved portion 238 and the straight portion 239 of the front edge of each of the left side lower beam 19L and the right side lower beam 19R described above is preferably provided below the height Hs of the step mat 236. In other words, the straight portion 239 is preferably provided below an upper surface of the step mat 236.

As long as the straight portion 239 is located below the upper surface of the step mat 236 as described above, the area of the sealed portion can be increased without reducing a distance along the upper surface of the step mat 236 in the left-right direction, that is, the width of the door opening through which the operator OP enters and exits. Thus, the strength of the door frame can be improved without impairing ease of entry and exit.

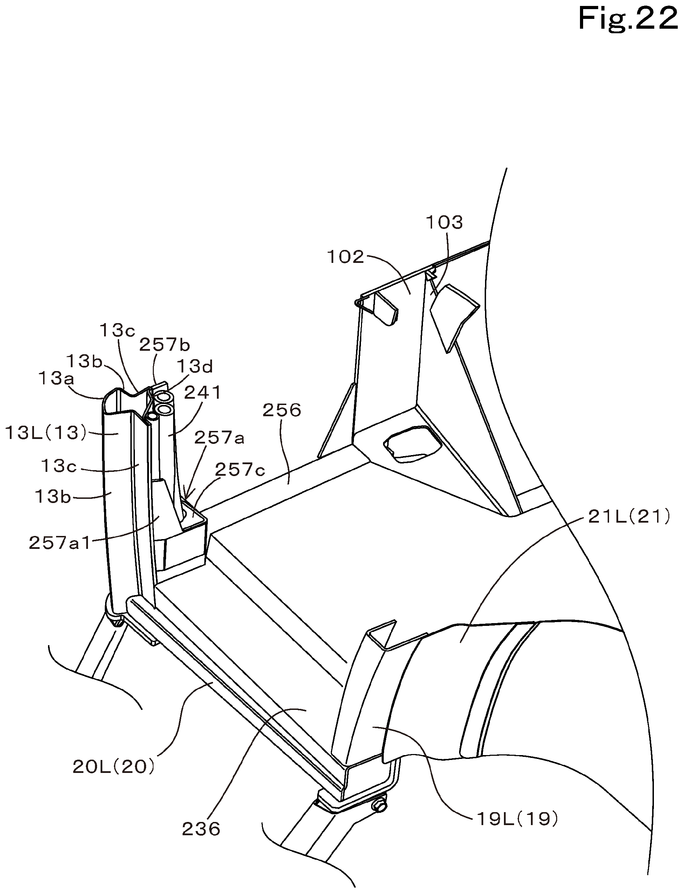

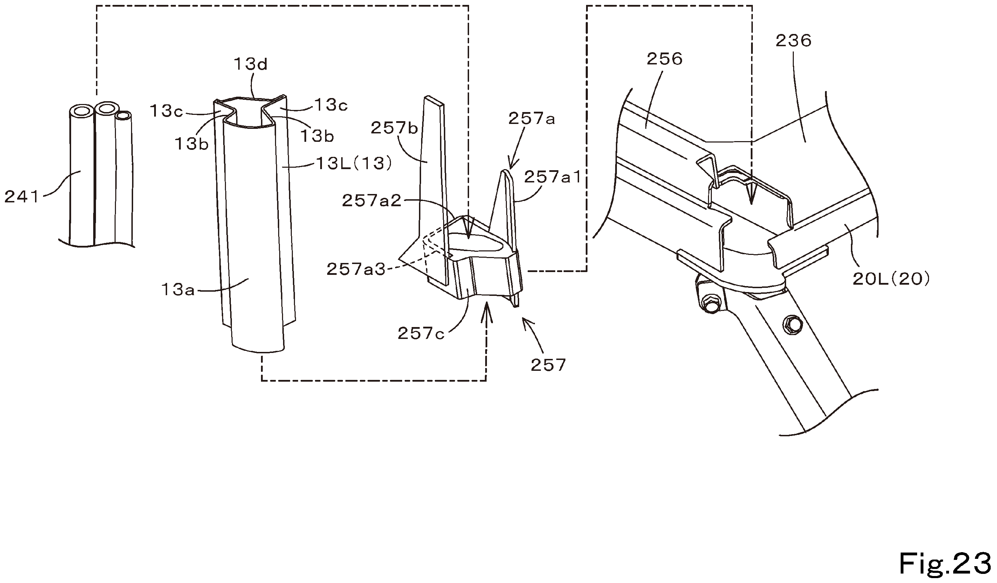

As illustrated in FIGS. 19 and 22, the lower portion of the left front pillar 13L is connected to a front end of the coupling frame 20L. The left front pillar 13L is a specially shaped tube. As illustrated in FIG. 23, the specially shaped tube serving as the left front pillar 13L includes a first portion 13a, a pair of second portions 13b, a pair of third portions 13c, and a fourth portion 13d. The first portion 13a, the second portions 13b, the third portions 13c, and the fourth portion 13d are integral with each other as a single piece.

The first portion 13a is a face facing outward of the cabin 1 and has an arc shape. The pair of second portions 13b extend from opposite ends of the first portion 13a toward the inside of the cabin 1 in directions approaching each other. The pair of third portions 13c extend from respective ends of the pair of second portions 13b toward the inside of the cabin 1 in directions away from each other. The fourth portion 13d is located opposite the first portion 13a such that opposite ends of the fourth portion 13d in the width direction abut the respective third portions 13c.

A bracket 257 is located inward of the left front pillar 13L (adjacent to the fourth portion 13d). The bracket 257 includes a bracket body 257a, a reinforcing rib 257b, and a tubular member 257c. The bracket body 257a includes a first plate portion 257a1, a second plate portion 257a2, and a third plate portion 257a3. The first plate portion 257a1, the second plate portion 257a2, and the third plate portion 257a3 are arranged in a U-shape (substantially C-shape) in plan view. The first plate portion 257a1 extends upward beyond the second plate portion 257a2 and the third plate portion 257a3.

The reinforcing rib 257b is joined to the third plate portion 257a3. The reinforcing rib 257b extends upward beyond the second plate portion 257a2 and the third plate portion 257a3. Additionally, the reinforcing rib 257b extends upward beyond the first plate portion 257a1. The tubular member 257c is surrounded on three sides by the first plate portion 257a1, the second plate portion 257a2, and the third plate portion 257a3.

As illustrated in FIGS. 22 and 23, the bracket 257 is located inward of the left front pillar 13L (adjacent to the fourth portion 13d) and is joined to the left coupling frame 20L and a front lower frame 256. The first plate portion 257a1 of the bracket 257 is joined to the front end of the coupling frame 20L, and the second plate portion 257a2 is joined to a left end of the front lower frame 256.

The first plate portion 257a1 is joined to one of the pair of third portions 13c of the left front pillar 13L. As described above, the first plate portion 257a1 extends upward beyond the second plate portion 257a2 and the third plate portion 257a3. This secures a large length of joint (area of joint) between the first plate portion 257a1 and the third portion 13c. This allows the first plate portion 257a1 to be firmly joined to the left front pillar 13L.

The reinforcing rib 257b is joined to the other of the pair of third portions 13c of the left front pillar 13L. As described above, the reinforcing rib 257b extends upward beyond the second plate portion 257a2 and the third plate portion 257a3. This secures a large length of joint (area of joint) between the reinforcing rib 257b and the third portion 13c. This allows the reinforcing rib 257b to be firmly joined to the left front pillar 13L.

As described above, the first plate portion 257a1 and the reinforcing rib 257b can be firmly joined to the left front pillar 13L. Thus, the bracket 257 can be firmly joined to the left front pillar 13L. In this case, the reinforcing rib 257b, which extends upward beyond the first plate portion 257a1, can enhance the strength of joining to the left front pillar 13L. Therefore, the reinforcing rib 257b can increase the strength with which the bracket 257 is joined to the left front pillar 13L.

The tubular member 257c allows an air-conditioner hose 241 extending in the top-bottom direction to extend therethrough. The air-conditioner hose 241 extends downward from the cabin 1 through the tubular member 257c. The air-conditioner hose 241 extends in the top-bottom direction along an inner face (facing the inside of the cabin 1) of the fourth portion 13d of the left front pillar 13L. The first plate portion 257a1 and the reinforcing rib 257b are arranged to sandwich the air-conditioner hose 241 therebetween. Therefore, the first plate portion 257a1 and the reinforcing rib 257b can function as guides for defining the direction of the air-conditioner hose 241.

Although not illustrated, the bracket 257 is also provided inward of the right front pillar 13R (adjacent to the fourth portion 13d) located in a right front portion of the cabin 1. The configuration (e.g., arrangement) of the right front pillar 13R, the coupling frame 20R, the front lower frame 256, the bracket 257, and the air-conditioner hose 241 in the right front portion of the cabin 1 is the same as the configuration (e.g., arrangement) of the left front pillar 13L, the coupling frame 20L, the front lower frame 256, and the air-conditioner hose 241 in a left front portion of the cabin 1.

In the cabin 1 of the present invention, the front panel 31 is a seamless one-piece panel member and thus has a large weight. The load resulting from the weight of the front panel 31 needs to be supported by a front portion of the step 23. In a case where a front panel includes vertically separated panel members (like a related-art front panel), a frame extending in the horizontal direction is provided between the upper and lower panel members to support the panel members. Therefore, the load of such a front panel acting on the step is not large. However, in a case where the front panel 31 is a one-piece panel member (as in the cabin 1 of the present invention), the load of the front panel 31 is applied to the step 23 without being distributed. Therefore, the load of the front panel acting on the step 23 is large. For this reason, in the cabin 1 of the present invention, box-shaped reinforcing brackets 240 extending in the left-right direction are joined to a front portion of a lower surface of the step 23 (step plate) to reinforce the step 23 (step plate) defining the floor of a front portion of the cabin 1.

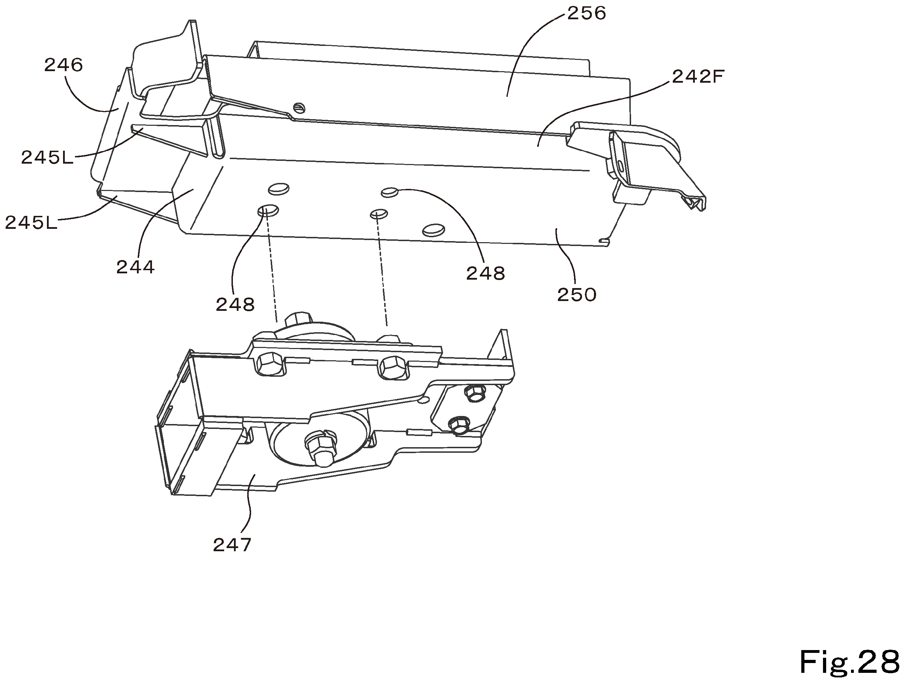

As illustrated in FIG. 28, the reinforcing brackets 240 include a left reinforcing bracket 240L and a right reinforcing bracket 240R. The left reinforcing bracket 240L is joined to the left front portion of the lower surface of the step 23. The right reinforcing bracket 240R is joined to the right front portion of the lower surface of the step 23. The left reinforcing bracket 240L and the right reinforcing bracket 240R are symmetrical in shape with respect to a centerline of the cabin 1 in the width direction, the centerline extending in the front-rear direction.

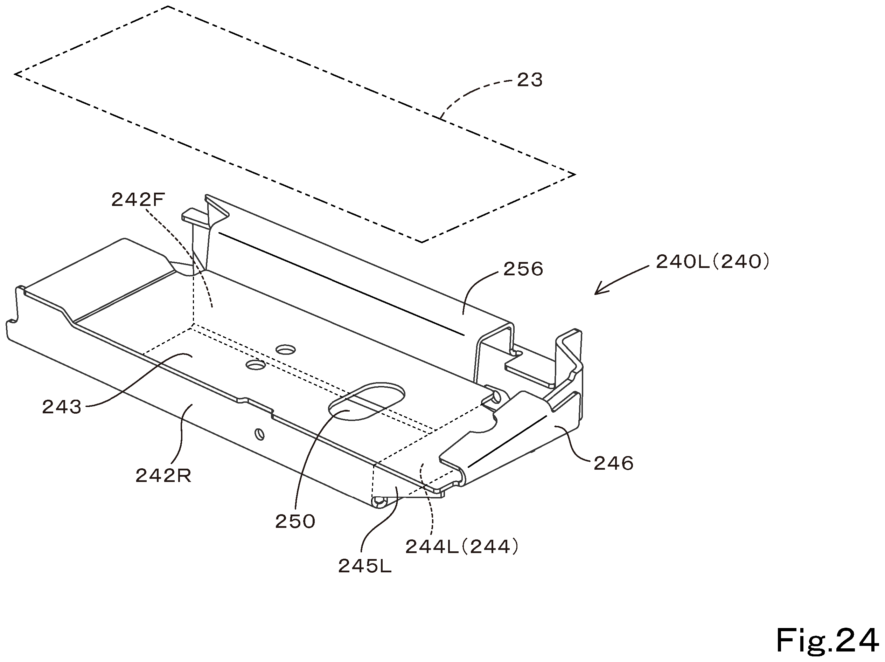

FIG. 24 illustrates the shape of the left reinforcing bracket 240L. As illustrated in FIG. 24, the reinforcing bracket 240 has a rectangular prism shape and a rectangular cross-section taken along the front-rear direction. An upper portion of the reinforcing bracket 240 is joined to the step 23. A front portion of the reinforcing bracket 240 is joined to the front lower frame 256 (refer to FIG. 2). In other words, each of the reinforcing brackets 240 is joined to both the front lower frame 256 located forward of the reinforcing bracket 240 and the step 23 located above the reinforcing bracket 240, and the three members cooperate to bear the load of the front panel 31.

As described above, the reinforcing bracket 240 is box-shaped (rectangular prism-shaped), and a cross-section thereof taken along the front-rear direction is rectangular. The reinforcing bracket 240 having such a shape has higher rigidity than a bracket formed merely by bending a portion of a plate. Therefore, joining the reinforcing bracket 240 having such a shape to the front portion of the step 23 effectively reinforces the front portion of the step 23. This allows the front portion of the step 23 to reliably support the load of the front panel 31.

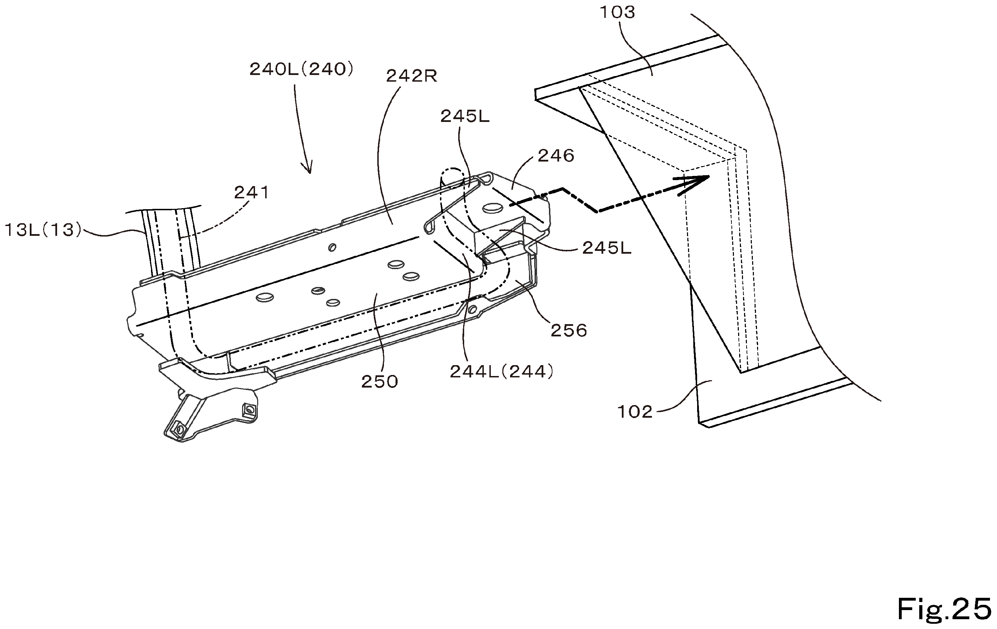

As illustrated in FIGS. 24 and 25, the reinforcing bracket 240 includes a bottom plate 250 located below and at a distance from the lower surface, indicated at 23a, of the step 23. The bottom plate 250 is a substantially rectangular plate that is elongated in the left-right direction. A front plate 242F and a rear plate 242R each extending in the top-bottom direction are provided at a front end and a rear end of the bottom plate 250, respectively. Furthermore, a top plate 243 is provided between an upper end of the front plate 242F and an upper end of the rear plate 242R. In other words, the reinforcing bracket 240 has a rectangular tubular shape extending in the left-right direction that is defined by the bottom plate 250, the front plate 242F, the rear plate 242R, and the top plate 243. In the present example embodiment, the reinforcing bracket 240 includes the top plate 243 and has a rectangular cross-section taken along the front-rear direction. An upper surface of the top plate 243 is joined to the lower surface 23a of the step 23.

However, the reinforcing bracket 240 may be configured without the top plate 243. In this case, the reinforcing bracket 240 has a U-shaped (substantially U-shaped) cross-section taken along the front-rear direction that opens upward. In this case, the upper portion of the reinforcing bracket 240 other than the top plate 243 (including the upper ends of the front plate 242F and the rear plate 242R) is joined to the lower surface 23a of the step 23.

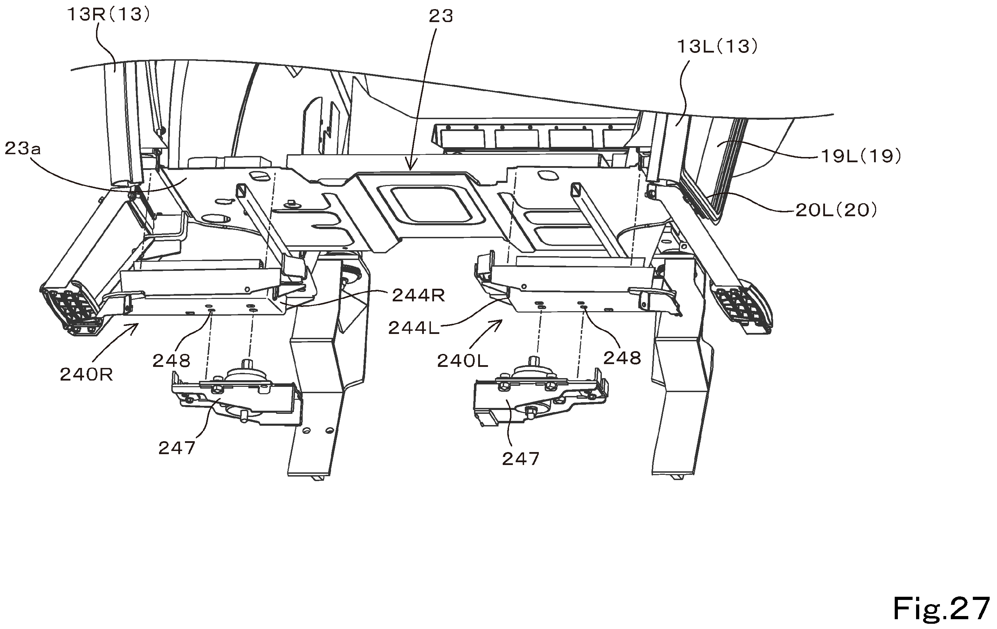

As illustrated in FIGS. 24, 25, and 27, a vertical plate 244L extending upward toward the lower surface 23a is provided at a right end of the bottom plate 250 of the left reinforcing bracket 240L. The vertical plate 244L is provided to close a rightward-facing opening of the left reinforcing bracket 240L having a rectangular tubular shape. As illustrated in FIG. 27, a vertical plate 244R extending upward toward the lower surface 23a is provided at a left end of the bottom plate 250 of the right reinforcing bracket 240R. The vertical plate 244R of the right reinforcing bracket 240R is provided to close a leftward-facing opening of the right reinforcing bracket 240R having a rectangular tubular shape. As described above, the vertical plate 244L closes a right end of the left reinforcing bracket 240L, and the vertical plate 244R closes a left end of the right reinforcing bracket 240R. Hereinafter, the vertical plate 244L and the vertical plate 244R may be collectively referred to as vertical plates 244.

As described above, the left reinforcing bracket 240L includes the top plate 243 as an upper portion, the bottom plate 250 as a lower portion, the front plate 242F as a front portion, the rear plate 242R as a rear portion, and the vertical plate 244L as a right portion. A left portion of the left reinforcing bracket 240L is connected to the coupling frame 20L (refer to FIGS. 2 and 27). Thus, a space (hereinafter, referred to as a bracket internal space) surrounded by the top plate 243, the bottom plate 250, the front plate 242F, the rear plate 242R, and the vertical plate 244L of the left reinforcing bracket 240L and the coupling frame 20L is provided at the left front portion of the step 23.

Additionally, the right reinforcing bracket 240R includes the top plate 243 as an upper portion, the bottom plate 250 as a lower portion, the front plate 242F as a front portion, the rear plate 242R as a rear portion, and the vertical plate 244R as a left portion. A right portion of the right reinforcing bracket 240R is connected to the coupling frame 20R (refer to FIG. 2). Thus, a space (hereinafter, referred to as a bracket internal space) surrounded by the top plate 243, the bottom plate 250, the front plate 242F, the rear plate 242R, and the vertical plate 244R of the right reinforcing bracket 240R and the coupling frame 20R is provided at the right front portion of the step 23.

Since the above-described bracket internal spaces are provided, vibration and sound transmitted from below the reinforcing brackets 240L and 240R toward the cabin are attenuated within the internal spaces. This achieves a vibration reduction effect and a sound insulation effect.

The above-described vertical plates 244 of the left and right reinforcing brackets 240L and 240R are provided with reinforcing ribs 245. The reinforcing ribs 245 include at least one left reinforcing rib 245L connecting the vertical plate 244L at the right side of the left reinforcing bracket 240L and the lower surface 23a of the step 23 and at least one right reinforcing rib 245R connecting the vertical plate 244R at the left side of the right reinforcing bracket 240R and the lower surface 23a of the step 23. The left reinforcing rib 245L is provided so as to extend rightward from the vertical plate 244L, and the right reinforcing rib 245R is provided so as to extend leftward from the vertical plate 244R.

The reinforcing ribs 245 are plate members each having a substantially triangular shape as viewed from the front or rear. Two reinforcing ribs 245 are provided in total for each of the vertical plates 244, one at a front end of the vertical plate 244 and the other at a rear end thereof. Such reinforcing ribs 245 allow the rigidity of the reinforcing brackets 240L and 240R to be further improved, thus further improving the strength with which the step 23 supports the front panel 31.

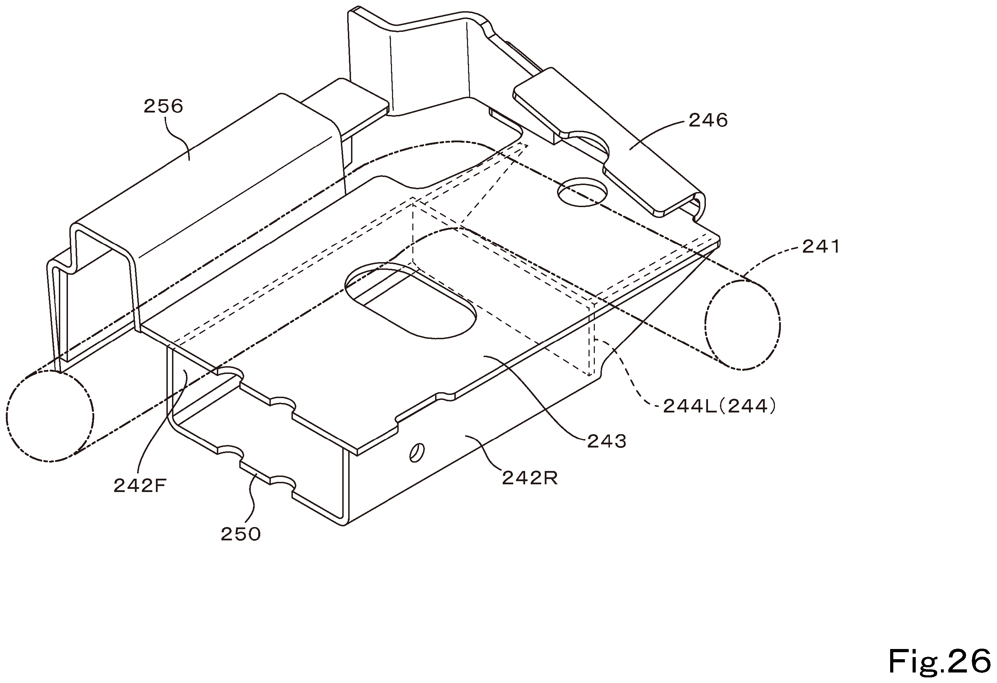

As illustrated in FIGS. 25 and 26, the cabin 1 includes the air-conditioner hose 241 through which refrigerant flows between the cabin 1 and the air conditioner 26 (refer to FIG. 1). The air-conditioner hose 241 is located along a path outside the reinforcing brackets 240. Therefore, the air-conditioner hose 241 is not located in the bracket internal space of each of the left reinforcing bracket 240L and the right reinforcing bracket 240R. For this reason, it is unnecessary to provide an opening that allows the air-conditioner hose 241 to extend therethrough in the left reinforcing bracket 240L and the right reinforcing bracket 240R. Thus, the air-conditioner hose 241 does not impair the vibration reduction effect and the sound insulation effect achieved by providing the above-described bracket internal spaces.

As illustrated in FIG. 25, the left front pillar 13L is provided forward of and to the left of the left reinforcing bracket 240L. The left front pillar 13L, which is a specially shaped tube having a hollow interior, allows the air-conditioner hose 241 to extend therethrough. The air-conditioner hose 241 extending outward from the lower end of the left front pillar 13L extends rightward along the path provided forward of the reinforcing bracket 240 and below the rear lower frame 17, passes to the right of the vertical plate 244 of the left reinforcing bracket 240L, and is guided through a cutout 100, which will be described later, to a heat exchanger such as a radiator provided in the space enclosed by the hood.

Although not illustrated, the air-conditioner hose 241 can extend through the interior of the right front pillar 13R. In this case, the air-conditioner hose 241 extending outward from the lower end of the right front pillar 13R extends leftward along the path provided forward of the reinforcing bracket 240 and below the rear lower frame 17, passes to the left of the vertical plate 244 of the right reinforcing bracket 240R, and is guided through the cutout 100, which will be described later, to the heat exchanger such as a radiator provided in the space enclosed by the hood.

In such a case where the air-conditioner hose 241 is provided along the path extending outside the reinforcing bracket 240, the strength (rigidity) of the reinforcing bracket 240 can be enhanced as compared with a case in which an air-conditioner hose is provided inside a reinforcing bracket. For example, if a structure for routing the air-conditioner hose is provided inside the reinforcing bracket, it becomes difficult to provide ribs (e.g., internal ribs 249, which will be described later) inside the reinforcing bracket 240 by an amount corresponding to the structure for routing the air-conditioner hose, which may reduce the rigidity of the reinforcing bracket. In this respect, when the air-conditioner hose 241 is provided outside the reinforcing bracket 240, the internal ribs 249 and the like can be easily provided inside the reinforcing bracket 240. The reinforcing bracket 240 can have a structure specialized for reinforcement, thus further improving the strength of the step 23.

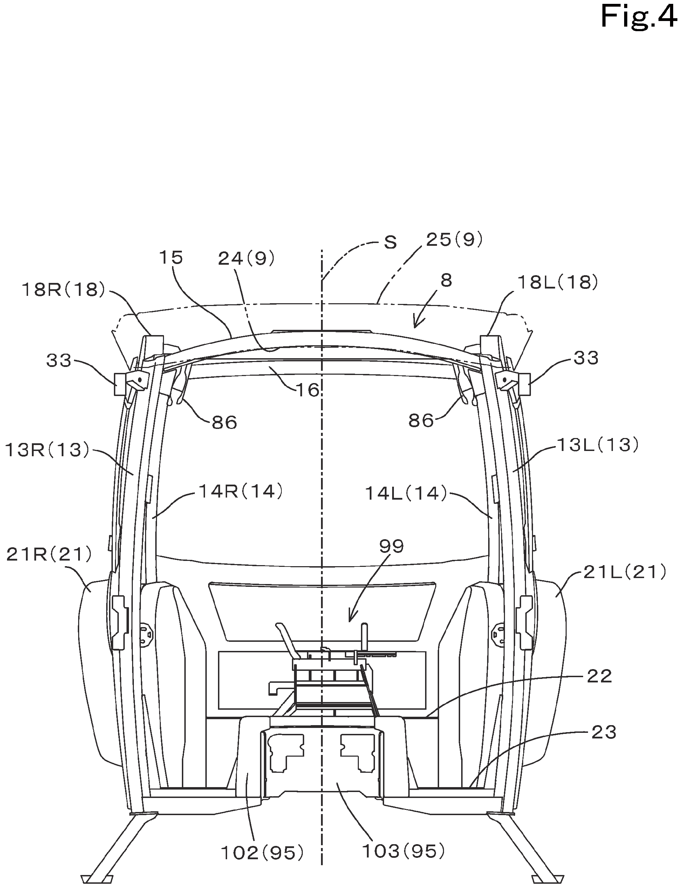

As illustrated in FIG. 5, the cabin 1 according to the present example embodiment includes the front panel 31 with the cutout 100, which is located in a lower portion of the front panel 31 that is central in the left-right direction. A gate-shaped opening frame 102 (refer to FIG. 4) is attached along the cutout 100. The opening frame 102 is a member having a shape extending along an opening of the cutout 100, bonded to a peripheral edge of the opening, and having high support strength. Therefore, a member that couples the above-described reinforcing bracket 240 and the opening frame 102 to each other can further improve the support strength of the step 23. For this reason, in the cabin 1 according to the present example embodiment, a coupling-purpose frame 246 is provided between the opening frame 102 and the reinforcing bracket 240 to couple the opening frame 102 and the reinforcing bracket 240 together.

As illustrated in FIG. 25, the coupling-purpose frame 246 is integral with the reinforcing bracket 240. Specifically, the coupling-purpose frame 246 extends upward from an inner end of the top plate 243 of the reinforcing bracket 240 in the width direction. The coupling-purpose frame 246 includes an end face (indicated by the lead line for reference sign 246) facing the cutout 100 and having a triangular shape. Furthermore, the end face of the coupling-purpose frame 246 that faces the cutout 100 is joined to a rear surface of the opening frame 102 provided along the cutout 100 of the front panel 31. The above-described coupling-purpose frame 246 provided to couple the reinforcing bracket 240 and the opening frame 102 together can further improve the strength of support by the reinforcing bracket 240.

As illustrated in FIG. 28, a lower surface of the reinforcing bracket 240 includes a plurality of attachment portions 248, to which a mount member 247 to support the cabin 1 from below is attached, provided at positions spaced apart from each other in the front-rear direction. The mount member 247 includes mount rubber or the like. In the present example embodiment, the attachment portions 248 are insertion holes, through each of which a bolt or the like can extend, and allow the mount member 247 to be attached to the reinforcing bracket 240 with bolts or the like. In the example illustrated in FIG. 28, the attachment portions 248 are provided in two sets spaced apart from each other in the front-rear direction in the lower surface of the reinforcing bracket 240, each set including two insertion holes arranged in the left-right direction. Since the attachment portions 248 are provided at positions spaced apart from each other in the front-rear direction as described above, the position at which the mount member 247 is attached can be changed in the front-rear direction. This allows the position at which the cabin is mounted to be shifted forward or rearward.

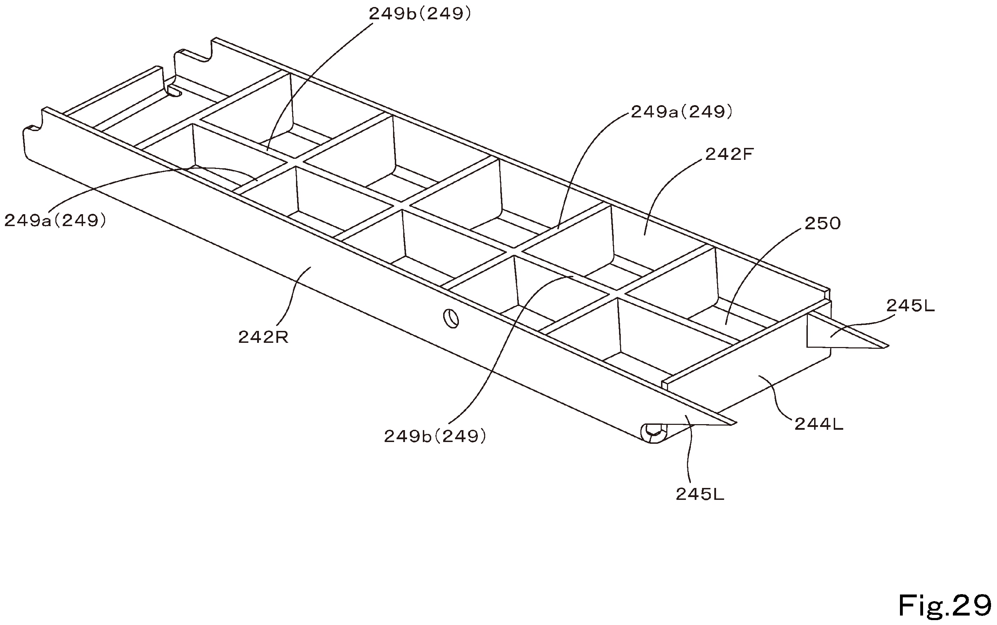

As a method of enhancing the rigidity of the reinforcing bracket 240, the internal ribs 249 may be provided inside the reinforcing bracket 240. FIG. 29 illustrates an example of the reinforcing bracket 240 provided with the internal ribs 249.

As illustrated in FIG. 29, the internal ribs 249 are provided in the left-right and front-rear directions on an upper surface of the bottom plate 250. The internal ribs 249 include first ribs 249a arranged between the front plate 242F and the rear plate 242R and extending in the front-rear direction and second ribs 249b arranged between the front plate 242F and the rear plate 242R and extending parallel to the front plate 242F and the rear plate 242R. In the present example embodiment, the internal ribs 249 define a lattice structure as a combination of the first ribs 249a extending in one direction and the second ribs 249b extending in a direction intersecting the one direction. The first ribs 249a and the second ribs 249b are used to integrate the bottom plate 250, the front plate 242F, the rear plate 242R, and the vertical plate 244 (and the top plate 243 in the present example embodiment), thus improving the rigidity of the reinforcing bracket 240. The above-described internal ribs 249, which are provided inside the reinforcing bracket 240, further improve the rigidity of the reinforcing bracket 240, thus further improving the support strength for the step 23.

Example embodiments of the present invention provide cabins 1 described in the following items.

(Item A1) A cabin 1 including a rear panel 32 located behind an operator's seat 6, a rear lower frame 17 located below the rear panel 32, and rear pillars 14 located to left and right of the rear panel 32, wherein the rear lower frame 17 includes a stepped member 202 protruding rearward in a stepped manner and is curved downward such that a central portion 17C of the rear lower frame is positioned lower than opposite end portions 17L, 17R thereof in a left-right direction.

Such a configuration of the cabin 1 according to item A1 allows an angle formed by the rear lower frame 17 and each of the rear pillars 14 to be greater than 90 degrees. If the rear panel 32 supported by the rear pillars 14 and the rear lower frame 17 is provided with a sealing member (weatherstrip), this configuration can prevent excessive deformation of the sealing member, thus preventing or reducing a reduction in sealing performance. Additionally, allowing the angle formed by the rear lower frame 17 and each of the rear pillars 14 to be greater than 90 degrees also improves rearward visibility through the rear panel 32. In addition, since the rear lower frame 17 includes the stepped member 202, the degree of curvature of the rear lower frame 17 can be easily adjusted as compared with a case in which the rear lower frame is a highly rigid rectangular tube. The angle formed by the rear lower frame 17 and each of the rear pillars 14 can be easily adjusted.

(Item A2) The cabin 1 according to item A1, further including a rear lower pane (rear lower panel 200) located rearward and downward of the operator's seat 6, and a supporting plate 208 supporting an upper portion of the rear lower pane (rear lower panel 200), wherein the supporting plate 208 is positioned to close a front opening of the stepped member 202.

In the cabin 1 according to item A2, since the supporting plate 208 is positioned to close the front opening of the stepped member 202, the rear lower frame 17 has a structure having a closed cross-section defined by a combination of the stepped member 202 and the supporting plate 208. This achieves significantly improved strength (rigidity).

(Item A3) The cabin 1 according to item A1 or A2, further including a weatherstrip 201 located between the rear panel 32 and the rear lower frame 17 and between the rear panel 32 and each of the rear pillars 14, wherein the stepped member 202 includes a first seal face 203 facing rearward and a second seal face 204 facing upward, the weatherstrip 201 is of a double-lip type including a main lip 201a and a sub-lip 201b, and the weatherstrip 201 is located between the rear panel 32 and the rear lower frame 17 and attached to the rear panel 32 such that the main lip 201a is in contact with the first seal face 203 and the sub-lip 201b is in contact with the second seal face 204.

In the cabin 1 according to item A3, if rainwater passes over the sub-lip 201b of the weatherstrip 201 and enters the inside of the weatherstrip 201, the rainwater that has entered the weatherstrip 201 can be promptly caused to flow downward through a space defined between the main lip 201a and the sub-lip 201b.

(Item A4) The cabin 1 according to item A3, wherein each of the rear pillars 14 is provided with a rear pillar cover 206 covering a rear face of the rear pillar 14, the rear pillar cover 206 includes (, at an end portion facing the rear panel 32,) a third seal face 210 with which the sub-lip 201b of the weatherstrip 201 is in contact, the rear face of the rear pillar 14 is flush with the first seal face 203 of the rear lower frame 17, and the second seal face 204 and the third seal face 210 are arranged along a curve having a single radius of curvature.

In the cabin 1 according to item A4, for sealing portions of the weatherstrip 201, the main lip 201a and the sub-lip 201b can be arranged along a curve having a single radius of curvature. This can prevent or reduce excessive deformation of the weatherstrip 201, thus preventing a reduction in sealing performance.

(Item A5) The cabin 1 according to item A3 or A4, further including a fender cover 207 provided below each of the rear pillars 14 and covering a rear portion of a fender 21L, 21R, wherein the fender cover 207 includes (, at an end portion facing the rear panel 32,) a fourth seal face 211 with which the sub-lip 201b of the weatherstrip 201 is in contact, a rear face of the fender cover 207 is flush with the first seal face 203 of the rear lower frame 17, and the second seal face 204 and the fourth seal face 211 are arranged along a curve having a single radius of curvature.

In the cabin 1 according to item A5, for the sealing portions of the weatherstrip 201, the main lip 201a and the sub-lip 201b can be arranged along a curve having a single radius of curvature. This can prevent or reduce excessive deformation of the weatherstrip 201, thus preventing a reduction in sealing performance.

(Item A6) The cabin 1 according to any one of items A3 to A5, wherein the rear lower frame 17 includes a protruding end face 202a protruding rearward, a lower face 202b adjoining a front portion of the protruding end face 202a and facing downward, the second seal face 204 adjoining the front portion of the protruding end face 202a and facing upward, the first seal face 203 adjoining a front portion of the second seal face 204 and facing rearward, and an upper face 202c adjoining a front portion of the first seal face 203 and facing upward, each of the upper face 202c and the lower face 202b is an inclined face sloping downward and rearward, and the rear lower frame is drawn such that the upper face 202c has a greater angle of inclination relative to a horizontal direction than the lower face 202b.

In the cabin 1 according to item A6, the stepped member 202 (rear lower frame 17) is drawn such that the upper face 202c has a greater angle of inclination relative to the horizontal direction than the lower face 202b. The upper face 202c, which slopes rearward, is shaped by drawing and allows a rearward field of view through the rear panel 32, particularly a rearward and downward field of view, to be provided to the driver (operator OP).

(Item A7) The cabin 1 according to any one of items A1 to A6, wherein the rear lower frame 17 includes the central portion 17C having a first radius of curvature R₁ and the end portions 17L, 17R each having a second radius of curvature R₂, and the first radius of curvature R₁ and the second radius of curvature R₂ are different from each other.

In the cabin 1 according to item A7, appropriately adjusting the central portion 17C of the rear lower frame 17 and the radius of curvature R₂ of the end portions 17L and 17R allows the rear lower frame 17 to be smoothly connected to the rear pillars 14.

(Item A8) The cabin 1 according to item A7, wherein the first radius of curvature R₁ is greater than the second radius of curvature R₂.

In the cabin 1 according to item A8, making the first radius of curvature R₁ of the central portion 17C of the rear lower frame 17 greater than the second radius of curvature R₂ of the end portions 17L and 17R allows the rear lower frame 17 to be smoothly connected to the rear pillars 14.

(Item B1) A cabin 1 including a rear lower panel 200 located behind and below an operator's seat 6, and a pair of side frames 205L and 205R located to left and right of the rear lower panel 200, wherein the pair of side frames 205L and 205R diverge rearward and upward while supporting entire left and right ends of the rear lower panel 200 in a top-bottom direction.

In the cabin 1 according to item B1, the pair of side frames 205L and 205R diverge rearward and upward. Such a configuration can secure a rearward field of view through opposite upper corners of the rear lower panel 200, thus achieving a wide rearward field of view. Additionally, the pair of side frames 205L and 205R support the entire left and right ends of the rear lower panel 200 in the top-bottom direction, thus enhancing the strength of a rear frame structure.

(Item B2) The cabin 1 according to item B1, further including a rear lower frame 17 located along an upper end of the rear lower panel 200, a rear panel 32 located above the rear lower frame 17, and rear pillars 14L and 14R located to left and right of the rear panel 32, wherein upper ends of the side frames 205 are joined to end portions 17L and 17R of the rear lower frame 17 in a left-right direction, and the end portions 17L and 17R of the rear lower frame 17 in the left-right direction are joined to respective lower portions of the rear pillars 14.

In the cabin 1 according to item B2, the upper ends of the side frames 205 are joined to the end portions 17L and 17R of the rear lower frame 17 in the left-right direction, and the end portions 17L and 17R of the rear lower frame 17 in the left-right direction are joined to the respective lower portions of the rear pillars 14. Such a configuration allows the side frames 205 to be arranged close to the rear pillars 14, thus improving the strength of a frame structure of the cabin 1.

(Item B3) The cabin 1 according to item B1 or B2, wherein the upper end of each of the side frames 205 is positioned adjacent to the lower portion of a corresponding one of the rear pillars 14 in the left-right direction.

In the cabin 1 according to item B3, the upper end of each of the side frames 205 is positioned adjacent to the lower portion of the corresponding one of the rear pillars 14 in the left-right direction. Such a configuration provides a frame structure in which the side frames 205, the rear lower frame 17, and the rear pillars 14 are joined together. Thus, the frame structure is less likely to deform, leading to significantly improved strength of the frame structure.

(Item B4) The cabin 1 according to item B2 or B3, further including a rear lower pane (rear lower panel 200) located behind and below the operator's seat 6, and a supporting plate 208 supporting an upper portion of the rear lower pane (rear lower panel 200), wherein the rear lower frame 17 includes a stepped member 202 protruding rearward in a stepped manner, and the supporting plate 208 is positioned to close a front opening of the stepped member 202 and is joined to the side frames 205 and the rear pillars 14.

In the cabin 1 according to item B4, the supporting plate 208 is positioned to close the front opening of the stepped member 202 and is joined to the side frames 205 and the rear pillars 14. Such a configuration can enhance the strength of the rear lower frame 17 and facilitates cutting and joining operations.

(Item B5) The cabin 1 according to item B4, further including fenders 21L and 21R located outward of the side frames 205 in the left-right direction, the fenders 21L and 21R being curved rearward and upward, wherein rear ends of the fenders 21L and 21R are joined to the lower portions of the rear pillars 14, and the stepped member 202 is joined to the rear ends of the fenders 21L and 21R.

In the cabin 1 according to item B5, the stepped member 202 is joined to the fenders 21L and 21R provided outward of the side frames 205, which are joined to the supporting plate 208, in the left-right direction. Such a configuration allows four types of members, namely the rear pillars 14, the side frames 205, the rear lower frame 17, and the fenders 21L and 21R, to be joined with high strength.

(Item B6) The cabin 1 according to any one of items B1 to B5, wherein an upper face of a rear portion of each of the fenders 21L and 21R defines an inclined face that slopes upward and outward in the left-right direction.

Such a configuration of the cabin 1 according to item B6 may provide a space that allows the rearward field of view to be secured above the rear portions of the fenders 21L and 21R. The rearward field of view can be easily secured.

(Item C1) A cabin 1 including a machine-body wall provided around an operator's seat 6, at least one air vent hole 222 in the machine-body wall, and a water-blocking cover 223 attached to the machine-body wall, wherein the water-blocking cover 223 is positioned to cover the at least one air vent hole 222 and defines, with the machine-body wall, a space opening downward.

In the cabin 1 according to item C1, allowing air to escape from the interior of the cabin through the at least one air vent hole 222 can prevent or reduce problems that have been encountered in four-pillar type cabins, such as a large pressure fluctuation in the interior when a door is closed and push-back of the door caused by the large pressure fluctuation. Additionally, the water-blocking cover 223 can prevent water from entering the cabin through the at least one air vent hole 222.

(Item C2) The cabin 1 according to item C1, wherein the machine-body wall includes a rear wall portion 221 located behind the operator's seat 6, and the at least one air vent hole 222 is provided in the rear wall portion 221.

Such a configuration of the cabin 1 according to item C2 allows the at least one air vent hole 222 to be provided rearward of the operator's seat 6, where interference with other devices is least likely to occur among the front, rear, left, and right sides of the operator's seat 6. This can prevent a reduction in operability or occupant comfort in the cabin 1.

(Item C3) The cabin 1 according to item C2, wherein the rear wall portion 221 is provided with at least one closure plate 224 to close the at least one air vent hole 222, and the at least one closure plate 224 is configured to open the at least one air vent hole 222 when a pressure in the cabin 1 exceeds a predetermined pressure.

In the cabin 1 according to item C3, the at least one closure plate 224 is provided to close the at least one air vent hole 222. Such a configuration can reliably block entry of splashed high-pressure washing water, foreign matter, and the like into the cabin through the at least one air vent hole 222.

(Item C4) The cabin 1 according to item C3, wherein the at least one air vent hole 222 includes a plurality of air vent holes 222 arranged in a left-right direction, and the at least one closure plate 224 includes a plurality of closure plates 224 provided to individually close the plurality of air vent holes 222.

Such a configuration of the cabin 1 according to item C4 allows the plurality of air vent holes 222 to be individually closed by the closure plates 224 based on the magnitude of pressure fluctuation in the cabin 1. This enables the air vent holes 222 to be used in various manners such that, for example, when a fluctuation in pressure in the cabin 1 is small, a small number of air vent holes 222 are opened, and when the fluctuation in pressure in the cabin 1 increases, a large number of air vent holes 222 are opened. This enables fine adjustment of the pressure in the cabin 1.

(Item C5) The cabin 1 according to item C2 or C3, wherein the rear wall portion 221 includes an inclined wall portion 226 extending rearward and downward, the at least one air vent hole 222 is provided in the inclined wall portion 226, and the at least one closure plate 224 covers the at least one air vent hole 222 on an upper face of the inclined wall portion 226.

Such a configuration of the cabin 1 according to item C5 allows the air vent hole 222 to be reliably closed by using the weight of the closure plate 224 itself. Additionally, the degree of fluctuation in air pressure in the cabin 1 required to open the closure plate 224 can also be set by changing the weight of the closure plate 224 itself. Therefore, the closure plate 224 does not open merely when outside air is introduced by, for example, operating an air conditioner, so that cool air or warm air inside the cabin 1 is not unnecessarily discharged to the outside. When a door is closed, the closure plate 224 allows outside air to be released, thus eliminating or reducing a fluctuation in air pressure in the cabin 1.

(Item C6) The cabin 1 according to item C5, wherein the rear wall portion 221 includes a rear plate portion 229 located behind the inclined wall portion 226 and extending in a top-bottom direction, the at least one air vent hole 222 includes at least one first hole 230 provided in the inclined wall portion 226 and at least one second hole 231 provided in the rear plate portion 229, and the at least one closure plate 224 is configured to close the at least one first hole 230.

Such a configuration of the cabin 1 according to item C6 allows the air in the cabin 1 to be guided to the water-blocking cover 223 through the first hole 230 in the inclined wall portion 226 and the second hole 231 in the rear plate portion 229. The water-blocking cover 223 can prevent or reduce entry of high-pressure washing water into the cabin 1 and entry of noise outside the vehicle into the cabin 1.

(Item C7) The cabin 1 according to any one of items C3 to C6, wherein the at least one closure plate 224 includes an upper end portion secured to the rear wall portion 221 above the at least one air vent hole 222 and is configured to swing upward about the upper end portion when the pressure in the cabin 1 exceeds the predetermined pressure.

In the cabin 1 according to item C7, the upper end portion of the closure plate 224 is secured to the rear wall portion 221 located above the air vent hole 222. Such a configuration allows the first hole 230 to be reliably closed by using the weight of the closure plate 224 itself. Additionally, since the predetermined pressure at which the closure plate 224 is opened can be adjusted by changing the weight of the closure plate 224 itself, the closure plate 224 can be opened and closed such that the closure plate 224 does not open, for example, when outside air is introduced by operating the air conditioner, and thus cool air or warm air in the cabin 1 is not unnecessarily discharged, but, when a door is closed, the outside air is released to prevent or reduce a fluctuation in air pressure in the cabin 1.

(Item C8) The cabin 1 according to item C6 or according to item C7 taken in combination with item C6, further including a ventilation passage 232 to discharge air to outside of the cabin 1 through the at least one first hole 230, the at least one second hole 231, and the space defined between the water-blocking cover 223 and a rear face of the rear wall portion 221.

The cabin 1 according to item C8 includes the ventilation passage 232 to discharge air to the outside of the cabin 1 along the water-blocking cover 223. Such a configuration allows the air inside the cabin 1 to be discharged to the outside while preventing or reducing entry of water and foreign matter into the cabin 1.

(Item C9) The cabin 1 according to item C8, wherein an opening area of the at least one second hole 231 and a flow area of the ventilation passage 232 defined between the water-blocking cover 223 and the rear face of the rear wall portion 221 are each set to be equal to or greater than an opening area of the at least one first hole 230.

In the cabin 1 according to item C9, the flow area of the second hole 231 and the flow area of the ventilation passage 232 defined by the water-blocking cover 223 are each set to be equal to or greater than the flow area of the first hole 230. Such a configuration allows air to be guided along the ventilation passage 232 extending from the first hole 230 through the second hole 231 to the water-blocking cover 223 without stagnating. Thus, the air inside the cabin 1 can be reliably discharged to the outside.

(Item C10) The cabin 1 according to item C5 or according to any one of items C6 to C9 taken in combination with item C5, wherein the at least one closure plate 224 and the inclined wall portion 226, to which the at least one closure plate 224 is attached, are inclined at an angle of 20 to 45 degrees relative to a horizontal direction.

Such a configuration of the cabin 1 according to item C 10 eliminates or reduces the likelihood that the closure plate 224 may be accidentally opened due to tilting of a vehicle provided with the cabin 1 when the vehicle travels on a road surface inclined at an angle of 20 to 45 degrees relative to the horizontal direction.

(Item C11) The cabin 1 according to any one of items C3 to C10, wherein the at least one closure plate 224 includes, at a rear end thereof, a rib portion 233 extending in a left-right direction.

In the cabin 1 according to item C11, the closure plate 224 includes the rib portion 233 extending in the left-right direction. The rib portion 233 eliminates or reduces the likelihood that the closure plate 224 may warp or deform. This can avoid a problem in which the warped or deformed closure plate 224 may fail to reliably close the air vent hole 222.

(Item C12) The cabin 1 according to item C6 or according to any one of items C7 to C11 taken in combination with item C6, wherein the rear plate portion 229 includes a first region 229a including the at least one second hole 231 and a second region 229b located below the first region 229a and inclined forward and downward.

In the cabin 1 according to item C12, the first region 229a including the second hole 231 and the second region 229b located below the first region 229a and inclined forward and downward are provided. In such a configuration in which the ventilation passage 232 is bent by the first region 229a and the second region 229b, even if splashed water from high-pressure washing or the like enters a space defined by a lower end of the water-blocking cover 223, the splashed water does not reach the interior of the cabin 1.

(Item D1) A cabin 1 including a door panel 27 located to a side of an operator's seat 6, a side lower beam 19 supporting a rear portion of the door panel 27 from below and extending in an arc shape from an upper end of the rear portion toward a lower end of a front portion of the door panel 27, and a coupling frame 20 supporting the front portion of the door panel 27 from below and extending forward from a lower end of the side lower beam 19, wherein the lower end of the side lower beam 19 is joined to an upper face of a rear portion of the coupling frame 20.

In the cabin 1 according to item D1, the lower end of the side lower beam 19 is joined to the upper face of the rear portion of the coupling frame 20. Such a configuration eliminates or reduces the likelihood that the accuracy of joining the coupling frame 20 to the side lower beam 19 may vary due to dimensional tolerances in the length of the coupling frame 20. This can improve the accuracy of joining the members defining a door opening.

(Item D2) The cabin 1 according to item D1, wherein a front edge of the side lower beam 19 includes a curved portion 238 curved in an arc shape and a straight portion 239 linearly extending forward and downward from a lower end of the curved portion 238 in a direction tangential to the arc of the curved portion 238.

In the cabin 1 according to item D2, the front edge of the side lower beam 19 includes the straight portion 239 linearly extending in the direction tangential to the arc of the curved portion 238. Such a configuration allows the area of a sealed portion for the coupling frame 20 to be increased forward as compared with a related-art cabin in which a lower end portion of the side lower beam 19 is defined only by the curved portion 238, thus improving the strength with which the side lower beam 19 is joined to the coupling frame 20.

(Item D3) The cabin 1 according to item D2, wherein a rear edge of the side lower beam 19 is curved in an arc shape rearward of the straight portion 239.

In the cabin 1 according to item D3, the rear edge of the side lower beam 19 is curved in an arc shape rearward of the straight portion 239. Such a configuration allows the cabin 1 to accommodate tires of various types. Additionally, this configuration allows a sealed portion having a large area to be provided between the straight portion 239 and the rear edge.

(Item D4) The cabin 1 according to any one of items D1 to D3, wherein a lower portion of the side lower beam 19 is shaped such that a distance between a front edge and a rear edge increases toward the lower end joined to the coupling frame 20.

In the cabin 1 according to item D4, the lower portion of the side lower beam 19 is shaped such that the distance between the front edge and the rear edge increases toward the lower end joined to the coupling frame 20. Such a configuration allows the area of the sealed portion to be sufficiently increased, thus significantly improving the strength of a door frame.

(Item D5) The cabin 1 according to any one of items D2 to D4, further including a step mat 236 provided on an upper portion of the coupling frame 20, wherein the straight portion 239 is provided below an upper surface of the step mat 236.

In the cabin 1 according to item D5, the straight portion 239 is located below the upper surface of the step mat 236. Such a configuration allows the area of the sealed portion to be increased without reducing a distance along the upper surface of the step mat 236 in the left-right direction, that is, the width of the door opening through which a driver (operator OP) enters and exits. Thus, the strength of the door frame can be improved without impairing ease of entry and exit.

(Item E1) A cabin 1 including an operator's seat 6; a front panel 31 located in front of the operator's seat 6; a step plate (step 23) located below the operator's seat 6 and defining a floor of the cabin 1, and at least one box-shaped reinforcing bracket 240 extending in a left-right direction and joined to a front portion of a lower surface of the step plate (step 23).

In the cabin 1 according to item E1, such a reinforcing bracket 240 provided for the step 23 achieves reinforcement of the front portion of the step 23. This allows the step 23 to reliably support the load of the front panel 31.

(Item E2) The cabin 1 according to item E1, wherein the at least one reinforcing bracket 240 has a rectangular cross-section taken along a front-rear direction.

In the cabin 1 according to item E2, the reinforcing bracket 240 has a rectangular cross-section taken along the front-rear direction. Such a configuration allows the reinforcing bracket 240, which has high structural rigidity, to reinforce the step 23, thus improving the support strength of the step 23.

(Item E3) The cabin 1 according to item E1 or E2, wherein the at least one reinforcing bracket 240 has a rectangular prism shape.

In the cabin 1 according to item E3, the reinforcing bracket 240 has a rectangular prism shape, which can secure high rigidity. Such a configuration can reliably improve the support strength of the step 23.

(Item E4) The cabin 1 according to any one of items E1 to E3, further including an air-conditioner hose 241 through which refrigerant is to flow between the cabin 1 and an air conditioner, wherein the air-conditioner hose 241 is located along a path outside the at least one reinforcing bracket 240.

In the cabin 1 according to item E4, the air-conditioner hose 241 is located along the path outside the reinforcing bracket 240. Therefore, the reinforcing bracket 240 does not need to include therein a structure (e.g., an opening or a cutout) that allows the air-conditioner hose 241 to extend therethrough. Such a configuration enables the reinforcing bracket 240 to have a structure specialized for reinforcement, thus further improving the support strength of the step 23.

(Item E5) The cabin 1 according to any one of items E1 to E4, wherein the at least one reinforcing bracket 240 includes a bottom plate 250 located below and at a distance from the lower surface 23a (lower surface 23a of the step 23), at least one vertical plate 244 extending from the bottom plate 250 toward the lower surface 23a, and at least one reinforcing rib 245 connecting the at least one vertical plate 244 and the lower surface 23a.

In the cabin according to item E5, the reinforcing rib 245 further improves the rigidity of the reinforcing bracket 240. This can further improve the support strength of the step 23.

(Item E6) The cabin 1 according to any one of items E1 to E5, wherein the at least one reinforcing bracket 240 includes a left reinforcing bracket 240L joined to a left portion of the lower surface 23a and a right reinforcing bracket 240R joined to a right portion of the lower surface 23a, and the at least one reinforcing rib 245 includes a left reinforcing rib 245L connecting the lower surface 23a and a vertical plate 244L at a right side of the left reinforcing bracket 240L and a right reinforcing rib 245R connecting the lower surface 23a and a vertical plate 244R at a left side of the right reinforcing bracket 240R.

In the cabin 1 according to item E6, the left reinforcing bracket 240L joined to the left portion of the lower surface 23a and the right reinforcing bracket 240R joined to the right portion of the lower surface 23a can reinforce left and right portions of the step 23 in the same manner, thus uniformly improving, in the left-right direction, the strength with which the step 23 supports the front panel 31.

(Item E7) The cabin 1 according to any one of items E1 to E6, wherein the at least one reinforcing bracket 240 includes therein an internal rib 249 connecting the lower surface 23a and an inner wall of the at least one reinforcing bracket 240.

In the cabin 1 according to item E7, the internal rib 249 further improves the rigidity of the reinforcing bracket 240. This can further improve the support strength of the step 23.

(Item E8) The cabin 1 according to any one of items E1 to E7, wherein the front panel 31 includes a cutout 100 located in a lower portion of the front panel 31 that is central in the left-right direction, the cutout 100 is provided with an opening frame 102 having a shape extending along an opening of the cutout 100 and bonded to a peripheral edge of the opening, and a coupling-purpose frame 246 is provided between the opening frame 102 and the at least one reinforcing bracket 240 to couple the opening frame 102 and the at least one reinforcing bracket 240 together.

In the cabin 1 according to item E8, the reinforcing bracket 240 and the opening frame 102 are coupled together by the coupling-purpose frame 246. This can further improve the support strength of the step 23.

(Item E9) The cabin 1 according to any one of items E 1 to E8, wherein the at least one reinforcing bracket 240 includes, in a lower surface thereof, a plurality of attachment portions 248 to which a mount member 247 supporting the cabin 1 from below is attached, the plurality of attachment portions 248 being provided at positions spaced apart from each other in a front-rear direction.

In the cabin 1 according to item E9, the plurality of attachment portions 248, to which the mount member 247 supporting the cabin 1 from below is attached, are provided at positions spaced apart from each other in the front-rear direction in the lower surface of the reinforcing bracket 240. Such a configuration allows the position at which the mount member 247 is attached to be changed in the front-rear direction. This allows the position at which the cabin 1 is mounted on the machine body 3 to be shifted forward or rearward.

While example embodiments of the present invention have been described above, it is to be understood that the example embodiments disclosed herein are considered as examples in all aspects and are not considered as limitations. The scope of the present invention is to be determined not by the foregoing description but by the claims, and is intended to include all variations and modifications within the scope of the claims and their equivalents.

### Reference Signs List

- 1: cabin

- 6: operator's seat
- 221: rear wall portion
- 222: air vent hole
- 223: water-blocking cover
- 224: closure plate
- 226: inclined wall portion
- 229: rear plate portion
- 230: first hole
- 231: second hole
- 232: ventilation passage
- 233: rib portion
- 234: first region
- 235: second region

## Claims

1. A cabin comprising:
a machine-body wall provided around an operator's seat;
at least one air vent hole in the machine-body wall; and
a water-blocking cover attached to the machine-body wall, wherein
the water-blocking cover is positioned to cover the at least one air vent hole and defines, with the machine-body wall, a space opening downward.

2. The cabin according to claim 1, wherein
the machine-body wall includes a rear wall portion located behind the operator's seat, and
the at least one air vent hole is provided in the rear wall portion.

3. The cabin according to claim 2, wherein
the rear wall portion is provided with at least one closure plate to close the at least one air vent hole, and
the at least one closure plate is configured to open the at least one air vent hole when a pressure in the cabin exceeds a predetermined pressure.

4. The cabin according to claim 3, wherein
the at least one air vent hole comprises a plurality of air vent holes arranged in a left-right direction, and
the at least one closure plate comprises a plurality of closure plates provided to individually close the plurality of air vent holes.

5. The cabin according to claim 2 or 3, wherein
the rear wall portion includes an inclined wall portion extending rearward and downward,
the at least one air vent hole is provided in the inclined wall portion, and
the at least one closure plate covers the at least one air vent hole on an upper face of the inclined wall portion.

6. The cabin according to claim 5, wherein
the rear wall portion includes a rear plate portion located behind the inclined wall portion and extending in a top-bottom direction,
the at least one air vent hole includes at least one first hole provided in the inclined wall portion and at least one second hole provided in the rear plate portion, and
the at least one closure plate is configured to close the at least one first hole.

7. The cabin according to claim 3, wherein the at least one closure plate includes an upper end portion secured to the rear wall portion above the at least one air vent hole and is configured to swing upward about the upper end portion when the pressure in the cabin exceeds the predetermined pressure.

8. The cabin according to claim 6, further comprising:
a ventilation passage to discharge air to outside of the cabin through the at least one first hole, the at least one second hole, and the space defined between the water-blocking cover and a rear face of the rear wall portion.

9. The cabin according to claim 8, wherein an opening area of the at least one second hole and a flow area of the ventilation passage defined between the water-blocking cover and the rear face of the rear wall portion are each set to be equal to or greater than an opening area of the at least one first hole.

10. The cabin according to claim 5 as dependent on claim 3, wherein the at least one closure plate and the inclined wall portion, to which the at least one closure plate is attached, are inclined at an angle of 20 to 45 degrees relative to a horizontal direction.

11. The cabin according to claim 3, wherein the at least one closure plate includes, at a rear end thereof, a rib portion extending in a left-right direction.

12. The cabin according to claim 6, wherein the rear plate portion includes a first region including the at least one second hole and a second region located below the first region and inclined forward and downward.
